# EUROPEAN PATENT APPLICATION

(11) **EP 3 745 502 A1**
(43) Date of publication of application: **02.12.2020**
(21) Application number: 20176666.4
(22) Date of filing: 26.05.2020
(51) Int. Cl.: H01M 4/131, H01M 4/50, H01M 4/52, H01M 4/583, H01M 10/052, H01M 4/36, H01M 4/02

(54) **LITHIUM SECONDARY BATTERY**

(30) Priority: 27.05.2019 KR 20190061699
(71) Applicant: SK Innovation Co., Ltd., Seoul 03188 (KR)
(72) Inventor: HWANG, Duck Chul, 34124 Daejeon (KR); YOO, Kyung Bin, 34124 Daejeon (KR); HAN, Kook Hyun, 34124 Daejeon (KR)
(74) Representative: Stolmár & Partner Patentanwälte PartG mbB

(57) **Abstract**

A lithium secondary battery includes a cathode formed from a cathode active material including a lithium metal oxide particle containing nickel (Ni) and manganese (Mn), an anode formed from an anode active material containing a graphite-based material having a crystal interplanar distance (d002) of 3.356 to 3.365 □, and a separator interposed between the cathode and the anode. The lithium metal oxide particle includes a concentration gradient region formed between a center of the particle and a surface of the particle, and a ratio of a concentration (atomic%) of Ni with respect to a concentration (atomic%) of Mn at the surface of the lithium metal oxide particle is 0.29 or more and less than 6.

## Description

### CROSS-REFERENCE TO RELATED APPLICATION AND CLAIM OF PRIORITY

This application claims priority to Korean Patent Applications No. 10-2019-0061699 filed on May 27, 2019 in the Korean Intellectual Property Office (KIPO), the entire disclosure of which is incorporated by reference herein.

### BACKGROUND

### 1. Field

The present invention relates to a lithium secondary battery. More particularly, the present invention relates to a lithium secondary battery including a lithium metal oxide.

### 2. Description of the Related Art

A secondary battery which can be charged and discharged repeatedly has been widely employed as a power output source of a mobile electronic device such as a camcorder, a mobile phone, a laptop computer, etc., according to developments of information and display technologies. Recently, the secondary battery or a battery pack including the same is being developed and applied as an eco-friendly power output source of an electric automobile such as a hybrid vehicle.

The secondary battery includes, e.g., a lithium secondary battery, a nickelcadmium battery, a nickel-hydrogen battery, etc. The lithium secondary battery is highlighted due to high operational voltage and energy density per unit weight, a high charging rate, a compact dimension, etc.

For example, a lithium secondary battery may include an electrode assembly 150 including a cathode, an anode and a separation layer, and an electrolyte immersing the electrode assembly 150. The lithium secondary battery may further include an outer case having, e.g., a pouch shape.

A lithium metal oxide may be used as a cathode active material of the lithium secondary battery, and high capacity, high output, and high lifespan characteristics are desired to the lithium secondary battery.

As application range of the lithium secondary battery is expanded, a cathode active material and an anode active material of the lithium secondary battery need to be designed to have a higher capacity and a higher energy density within a limited unit volume of the battery.

For example, the cathode active material and the anode active material should be designed to increase the capacity and also improve lifespan, the storage stability and mechanical stability at a high temperature.

However, it is not easy for the cathode electrode active material to satisfy all of the above-described properties. For example, Korean Published Patent Application No. 10-2017-0093085 discloses a cathode electrode active material including a transition metal compound and an ion adsorption binder, but high energy density, sufficient life characteristics and high temperature stability may not be ensured.

### SUMMARY

According to an aspect of the present invention, a lithium secondary battery having improved electrical/mechanical reliability and stability is provided.

According to exemplary embodiments of the present invention, A lithium secondary battery includes a cathode formed from a cathode active material including a lithium metal oxide particle containing nickel (Ni) and manganese (Mn), an anode formed from an anode active material containing a graphite-based material having a crystal interplanar distance (d002) of 3.356 to 3.365□, and a separator interposed between the cathode and the anode. The lithium metal oxide particle includes a concentration gradient region formed between a center of the particle and a surface of the particle, and a ratio of a concentration (atomic%) of Ni with respect to a concentration (atomic%) of Mn at the surface of the lithium metal oxide particle is 0.29 or more and less than 6.

In some embodiments, the ratio of a concentration (atomic%) of Ni with respect to a concentration (atomic%) of Mn at the surface of the lithium metal oxide particle may be 1.2 to 5.3.

In some embodiments, a Ni concentration may continuously decrease and a Mn concentration may continuously increase from the center toward the surface in the concentration gradient region of the lithium metal oxide particle.

In some embodiments, the lithium metal oxide particle may further include cobalt (Co). A concentration of Co may be constant from the center to the surface.

In some embodiments, each of Ni and Mn may have a constant concentration gradient slope in the concentration gradient region.

In some embodiments, a difference in amounts between a concentration gradient slope of Ni and a concentration gradient slope of Mn may be 5% or less in the concentration gradient region.

In some embodiments, the lithium metal oxide particle may include a core region having constant concentrations of metal elements and embracing at least 50% of a radius of the lithium metal oxide particle from the center.

In some embodiments, the concentration gradient region may be extended from a surface of the core region.

In some embodiments, the lithium metal oxide particle may further include a peripheral portion extending from at least a portion of the surface toward the center and having a constant concentration of metal elements.

In some embodiments, the concentration gradient region may be formed at a region between the core region and the peripheral portion.

In some embodiments, a distance (depth) in which the peripheral portion extends from a surface of the lithium metal oxide particle to a center may be 10nm to 200nm.

In some embodiments, an overall average chemical composition the lithium metal oxide particle may be represented by Chemical Formula1 below.

[Chemical Formula 1] LiₓNiₐMn_{b}M3_{c}O_{y}

In Chemical Formula 1, M3 may include at least one selected from a group consisting of Co, Na, Mg, Ca, Ti, V, Cr, Cu, Zn, Ge, Sr, Ag, Ba, Zr, Nb, Mo, Al, Ga and B, and x, y a, b, and c may be in ranges of 0<x≤1.1, 2≤y≤2.02, 0≤a≤1, 0≤b≤1, 0≤c≤1, 0<a+b+c≤1.

In some embodiments, the anode active material may include a natural graphite and an artificial graphite.

In some embodiments, a crystal interplanar distance (d002) of the natural graphite may be 3.356 to 3.360□ and a crystal interplanar distance (d002) of the artificial graphite may be 3.361 to 3.365□.

In some embodiments, the anode active material may include a natural graphite and an artificial graphite in a weight ratio of more than 0:100 and 90:10 or less.

In some embodiments, a mixed weight ratio of the natural graphite and the artificial graphite may be 10:90 to 50:50.

According to exemplary embodiments, a cathode active material of a lithium secondary battery may include a concentration gradient region or a concentration incline region in at least one region between a center portion and a surface portion. For example, a high-Ni composition may be formed in the center portion, and a relatively high-Mn composition may be formed in the surface portion. Thus, a high capacity, high energy density can be implemented through the center portion, and a cathode or a cathode active material with improved chemical and mechanical stability can be obtained through the surface portion.

In some embodiments, in the concentration gradient region, a concentration gradient of an active metal may be maintained substantially constant, and accordingly, a chemical composition between the central portion and the surface portion may gradually change to stably implement desired performance.

In some embodiments, a mixture of a natural graphite and an artificial graphite may be used as a anode active material of the lithium secondary battery. Therefore, a structure in which capacity and life stability are improved in balance can be realized at each of a cathode and a anode.

### BRIEF DESCRIPTION OF THE DRAWINGS

FIG. 1 and FIG. 2 are a schematic planar view and a schematic cross-sectional view a illustrating a lithium secondary battery in accordance with exemplary embodiments, respectively;
FIG. 3 to FIG. 9 are concentration profile graphs of cathode active materials included in Examples;
FIG. 10 is a concentration profile graph of a cathode active material included in Comparative Example 1.

### DETAILED DESCRIPTION OF THE EMBODIMENTS

According to exemplary embodiments of the present invention, a lithium secondary battery including a cathode active material including a lithium metal oxide particle having a concentration gradient region, and an anode including a graphite-based material is provided to improve energy density, lifespan, and high temperature stability in balance.

Hereinafter, the present invention will be described in detail with reference to the accompanying drawings. However, those skilled in the art will appreciate that such embodiments described with reference to the accompanying drawings are provided to further understand the spirit of the present invention and do not limit subject matters to be protected as disclosed in the detailed description and appended claims.

The terms "a first" and "a second" used herein are not intended to specify the number or the order of objects, and only used to identify different elements or objects.

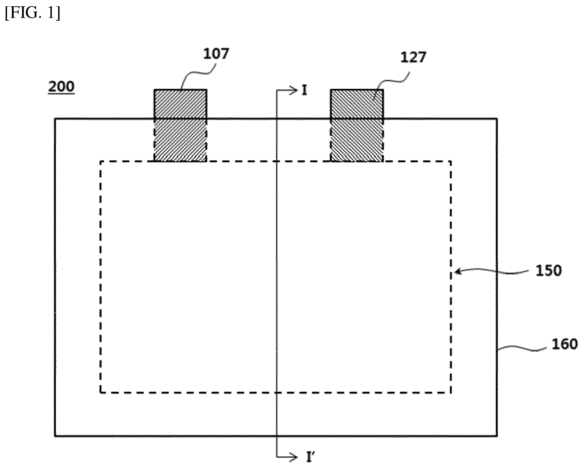

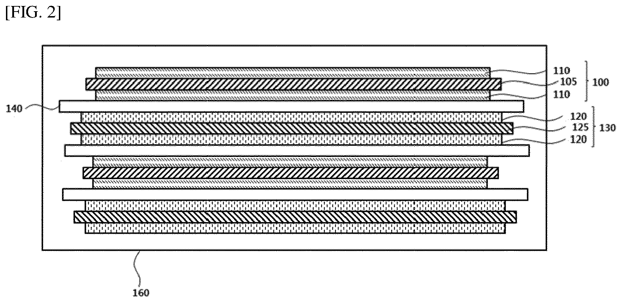

FIG. 1 and FIG. 2 are a schematic planar view and a schematic cross-sectional view a illustrating a lithium secondary battery in accordance with exemplary embodiments, respectively.

Referring to FIG. 1 and FIG. 2, a lithium secondary battery may include a cathode 100, an anode 130, and a separator 140 interposed between the cathode and the anode.

The cathode 100 may include a cathode current collector 105 and a cathode active material layer 110 formed by applying a cathode active material onto the cathode current collector 105. According to exemplary embodiments, the cathode active material may include a lithium metal oxide particle including a concentration gradient region between a center and a surface (eg, the outermost surface) of the particle.

In the lithium metal oxide particle, concentrations of lithium and oxygen may be substantially fixed throughout an entire region of a particle, and at least one metal element among elements excluding lithium and oxygen may have a continuous concentration gradient from a center toward a surface of a particle in the concentration gradient region.

The term "continuous concentration gradient" used herein may indicate a concentration profile which may be changed with a uniform trend or tendency between the central portion and the surface portion. The uniform trend may include an increasing trend or a decreasing trend.

In some embodiments, a substantially linear concentration gradient may be formed in the concentration gradient region. Accordingly, a concentration gradient slope which is substantially constant may be defined in the concentration gradient region.

In some embodiments, a concentration of at least one metal excluding lithium in the concentration gradient region may continuously increase, and a concentration of at least one metal may continuously decrease.

In some embodiments, a concentration of at least one metal excluding lithium in the concentration gradient region may have a substantially constant concentration from a center to a surface.

In some embodiments, metal elements excluding lithium in the lithium metal oxide particle may include a first metal M1 and a second metal M2. A concentration of the first metal M1 may be continuously decreased in the concentration gradient region. A concentration of the second metal M2 may be continuously increased in the concentration gradient region.

In some embodiments, the metals included in the lithium metal oxide particle except for lithium may further include a third metal M3. The third metal M3 may have a substantially constant concentration from the center to the surface.

The term "constant concentration" used herein may mean that a constant increase or decrease trend is not formed from a center to a surface, but a substantially uniform concentration is formed. Therefore, even when an increase, a decrease, an abnormality or an outlier is included in a local region of the lithium metal oxide particle, a generally constant concentration considering a process error should be included in a range of "constant concentration".

Additionally, the terms of "continuous increase or "continuous decrease of a concentration" used herein may include a case where an overall trend is substantially considered to be an increasing trend or a decreasing trend even when some point are deviated from the trend due to process error.

The term "concentration" used herein may indicate a molar ratio or an atomic percentage (atomic%) of the first to third metals relative to each other.

According to exemplary embodiments, an overall average chemical composition of the lithium metal oxide particle may be represented by Chemical Formula 1 below.

[Chemical Formula 1] LiₓM1ₐM2_{b}M3_{c}O_{y}

In the Chemical Formula 1 above, M1, M2 and M3 may independently include at least one selected from a group consisting of Ni, Co, Mn, Na, Mg, Ca, Ti, V, Cr, Cu, Zn, Ge, Sr, Ag, Ba, Zr, Nb, Mo, Al, Ga and B.

In the Chemical Formula 1, x, y, a, b and c may be in ranges of 0<x≤1.1, 1.98≤y≤ 2.02, 0<a<1, 0<b<1, 0<c<1, and 0<a+b+c ≤ 1.

In Chemical Formula 1, M1, M2, and M3 may represent the above-described first metal, second metal, and third metal, respectively. In some embodiments, M1, M2 and M3 may include nickel (Ni), manganese (Mn) and cobalt (Co), respectively.

In Chemical Formula 1, a, b, and c may represent average concentrations of M1, M2, and M3, respectively, in an entire region of a particle. In some embodiments, the first metal (M1) in Chemical Formula 1 may be nickel, for example, a, b and c may be in range of 0.6≤a≤0.95 and 0.05≤b+c≤0.4.

When a lower limit of a nickel concentration is less than about 0.6, overall capacity and output characteristics of a cathode active material may be excessively reduced. When an upper limit of a nickel concentration exceeds about 0.95, an overall life degradation and mechanical instability of a cathode active material may be occurred.

In some embodiments, a, b and c may be adjusted to 0.7≤a≤0.9 and 0.1≤b+c≤0.3 in consideration of the above-described capacity and stability. In preferred embodiments, a, b and c may be 0.77≤a<0.83, 0.07≤b≤0.13 and 0.07≤c≤0.13. More preferably, a, b and c may be 0.79 ≤ a ≤ 0.81, 0.09 ≤ b ≤ 0.11 and 0.09 ≤ c ≤ 0.11.

In this case, an average chemical composition of Ni:Co:Mn of the lithium metal oxide particle may be approximately 8:1:1, so that long-term lifespan stability and resistance uniformity can be sufficiently improved, while increasing an overall capacity and output of a particle.

For example, nickel may serve as a metal related to a capacity of the lithium secondary battery. As an amount of nickel becomes higher, capacity and power of the lithium secondary battery may be improved. However, an excessive amount of nickel may degrade of a life-span property of the battery, and may be disadvantageous in an aspect of mechanical and electrical stability of the battery. For example, when the amount of nickel is excessively increased, defects such as ignition or short-circuit by a penetration of an external object may not be sufficiently suppressed, and a sufficient capacity retention characteristic may not be secured when the battery would be repeatedly charged and discharged at a high temperature (e.g., 60°C or more),

However, according to example embodiments, nickel may be included as the first metal M1. Thus, the amount of nickel at a central portion may be relatively high to improve the capacity and power of the lithium secondary battery, and a concentration of nickel may be decreased from the central portion to the surface to prevent the defects from the penetration and a life-span reduction.

For example, manganese (Mn) may serve as a metal related to the mechanical and electrical stability of the lithium secondary battery. In example embodiments, an amount of Mn may be increased from the central portion to the surface so that the defects from the penetration such as ignition or short-circuit through the surface may be suppressed or reduced, and the life-span of the lithium secondary battery may be also enhanced.

For example, cobalt (Co) may serve as a metal related to a conductivity or a resistance of the lithium secondary battery. In example embodiments, a concentration of cobalt may be fixed or uniformly maintained through an entire region of the first cathode active material particle. Thus, a current or a charge flow through the first cathode active material particle may be uniformly maintained while improving the conductivity of the battery and maintaining low resistance.

In some embodiments, the lithium metal oxide particle may include a core region including a predetermined distance (first distance) in a direction from a center toward a surface.

For example, the first distance may be 1 µm or more from the center of the particle. In one embodiment, the first distance may be 3µm or more, preferably 5 µm or more, from the center of the particle.

In some embodiments, the core region may occupy 50% or more of a radius of the lithium metal oxide particle. In one embodiment the core region may occupy 60% or more. In one preferred embodiment, the core region may occupy 70% or more, and more preferably, occupy 80% or more of the radius of the lithium metal oxide particle.

In one embodiment, the first distance of the core region may be appropriately modulated according to lengths of a shell region described below and a concentration gradient region while occupying 50% or more of the radius of the lithium metal oxide particle as described above.

The core region may be provided as a constant concentration region (eg, a first constant concentration region). For example, a molar ratio or an atomic ratio of Ni, Co, and Mn in the core region may be maintained constant, and a high Ni concentration may be maintained in the core region as compared to other regions.

As described above, the distance of the core region may occupy 50% or more of the radius of the lithium metal oxide particle, so that high power and high capacity characteristics can be sufficiently exhibited from a center of a particle.

In some embodiments, the lithium metal oxide particle may include a shell region including a predetermined distance (second distance) in a direction toward the center from the surface. A peripheral portion in which a concentration ratio of metals of the surface is extended or is maintained at predetermined distance may be included in at least a portion of the shell region. The second distance may be a depth or a thickness of the peripheral portion. In some embodiments, the peripheral portion may be formed in an entire region of the shell region,

The second distance may be smaller than the first distance of a core region. In one embodiment, the second distance may range from about 10nm to 200nm. For example, the second distance may range from about 20nm to 200nm, or may range from about 30n, to 100nm. Preferably, the second distance may range from about 30nm to 60nm.

For example, the peripheral portion may be provided as a constant concentration region (eg, a second constant concentration region). For example, a molar ratio or an atomic ratio of Ni, Co and Mn in the peripheral portion may be maintained substantially constant, and a relatively high Mn concentration may be maintained compared to the core region.

By expanding a core region formed of a composition having a high Ni content from a center of a particle and assigning the core region to the largest region in a lithium metal oxide particle, a high capacity and high output structure can be effectively implemented. Additionally, by covering the core region at least partially through a peripheral portion having a relatively thin thickness compared to the core region, lifespan and capacity retention under a high temperature may be significantly improved.

The concentration gradient region may be formed between the core region and a surface of a lithium metal oxide particle. According to exemplary embodiments, the concentration gradient region of the lithium metal oxide particle may be formed in a specific region between a center of a particle and a surface of a particle.

For example, the concentration gradient region may be disposed between an outer surface of the core region and a surface of a lithium metal oxide particle.

In some embodiments, the concentration gradient region may be formed between the core region and the peripheral portion. For example, the concentration gradient region may extend from an outermost point of the core region to an innermost point of the peripheral portion.

The concentration gradient region may be provided as a transfer region or a buffer region in which a concentration is changed between the core region and the peripheral portion. A rapid change in concentration of chemical composition between the core region and the peripheral portion may be buffered through the concentration gradient region, so that capacity and output of the cathode active material can be uniformized or equalized generally. Addtionally, since a high-Ni region and a high-Mn region can coexist together through the concentration gradient region, capacity and life stability can be improved together.

In some embodiments, a length of the concentration gradient region from a center toward a surface of a particle may range from about 40nm to 800nm. Within this range, effects of increasing output and capacity through a high-Ni content implemented in the core region can be effectively delivered to the entire particle.

In one embodiment, the length of the concentration gradient region may range from about 40nm to 500nm, preferably from about 40nm to 400nm, more preferably from about 40nm to 300nm.

However, the length of the concentration gradient region may be appropriately adjusted in consideration of Ni and/or Mn content in the core region, distance or thickness of the core region, and Ni and/or Mn content in the peripheral portion, and the like. And, the length of the concentration gradient region should not be limited to the above-described range.

According to exemplary embodiments, a concentration of Ni in the concentration gradient region (molar ratio or atomic ratio) may decrease in a direction from a center toward a surface, and a content of Mn may increase in a direction from a center toward a surface.

As described above, a concentration gradient slope in the concentration gradient region may be defined. In some embodiments, magnitudes of the concentration gradient slopes of Ni and Mn may be substantially may be equal to each other. The term "substantially equal" may include having a difference in a range of 5%.

For example, a concentration of Ni may decrease in a direction from a center toward a surface according to the concentration gradient slope, and a concentration of Mn may increase in a direction from a center toward a surface according to the concentration gradient slope. The concentration gradient slope may represent a ratio of a change in atomic ratio (atomic%) with increasing distance (nm).

According to exemplary embodiments, the concentration gradient slope may be maintained substantially constant to form a substantially linear concentration slope. The term "constant concentration gradient slope" used herein may mean that substantially one concentration gradient slope can be defined to have a linear trend which is generally linear. The constant concentration gradient slope may include a case which is regarded as a generally linear slope even if an abnormality or an outlier is included in some region due to process error.

The lithium metal oxide particle may include a relatively high Mn content at a surface (or shell region, peripheral portion) relative to a center (or core region).

In example embodiments, a ratio of a concentration of Ni (atomic%) with respect to a concentration of Mn (atomic%) within the surface may be about 0.29 or more and less than about 6. In one preferred embodiment, the ratio of the concentration of Ni to the concentration of Mn within the surface may range from about 1.2 to 5.3.

In the above-described concentration ratio range, lifespan improvement and capacity retention at a high temperature can be effectively secured by a surface or a shell region (or a peripheral portion) through a relatively high-Mn composition. Addtionally, ignition stability at a high temperature can be improved.

In some exemplary embodiments, the cathode active material or the lithium metal oxide particle may further include a coating element or a doping element. For example, the coating element or the doping element may include Al, Ti, Ba, Zr, Si, B, Mg, P, alloys thereof, or oxides thereof. These may be used alone or in combination of two or more. The cathode active material particle may be passivated by the coating or doping element, so that stability for penetration of an external object and lifespan can be further improved.

In some embodiments, the lithium metal oxide particle may have a secondary particle structure in which primary particles having a rod-type shape are aggregated. Addtionally, an average particle diameter of the lithium metal oxide particle may be about 3*µ*m to about 15*µ*m.

In a formation of the cathode active material or the lithium metal oxide particle, metal precursor solutions having different concentrations may be prepared. The metal precursor solutions may include precursors of metals that may be included in the cathode active material. For example, the metal precursors may include halides, hydroxides, acid salts, etc., of the metals.

For example, the metal precursors may include a nickel precursor, a manganese precursor and a cobalt precursor.

In some embodiments, a first precursor solution having a target composition at the central portion of the lithium metal oxide particle (e.g., concentrations of nickel, manganese and cobalt at the central portion) and a second precursor solution having a target composition at the surface of the lithium metal oxide particle (e.g., concentrations of nickel, manganese and cobalt at the surface) may be each prepared.

Subsequently, a core region may be formed by forming a precipitate while reacting and stirring the first precursor solution. Thereafter, the second precursor solution may be added from a specific time point and mixed while continuously changing a mixing ratio so that a concentration gradient from a target composition of the core region to a target composition of the surface is continuously formed. Accordingly, a precipitate may be formed such that concentrations of metals inside form a concentration gradient region in a particle. Then, a target composition of a surface may be fixed or stabilized through a shell region and a peripheral portion by additionally introducing the second precursor solution.

In some embodiments, a chelate agent and a basic agent (e.g., an alkaline agent) may be added while forming the precipitate. In some embodiments, the precipitate may be thermally treated, and then a lithium salt may be mixed to the precipitate and sintered or thermally treated to obtain a lithium metal oxide particle as a cathode active material.

In exemplary embodiments, the cathode active material may be mixed and stirred together with a binder, a conductive additive and/or a dispersive additive in a solvent to form a slurry. The slurry may be coated on the cathode current collector 105, and pressed and dried to obtain the cathode 100.

The cathode current collector 105 may include stainless-steel, nickel, aluminum, titanium, copper or an alloy thereof. Preferably, aluminum or an alloy thereof may be used.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR). The binder may be used with a thickener such as carboxymethyl cellulose (CMC).

For example, a PVDF-based binder may be used as a cathode binder. In this case, an amount of the binder for forming a cathode active material layer may be decreased, and an amount of a cathode active material or a lithium metal oxide particle may be relatively increased. Thus, capacity and power output of the lithium secondary battery may be further improved.

The conductive additive may be added to facilitate an electron mobility between the active material particles. For example, the conductive additive may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃.

In some embodiments, the density of the cathode 100 may be about 3.0 to about 3.9g/cc, and preferably about 3.2 to about 3.8g/cc.

In exemplary embodiments, the anode 130 may include an anode current collector 125 and an anode active material layer 120 formed by coating an anode active material on the anode current collector 125. The anode active material may include a material that may be capable of adsorbing and ejecting lithium ions.

By adjusting a spacing between crystal planes (d-spacing) of (d002) of the graphite-based material used as the anode active material, lifespan stability implemented through the concentration gradient region of the cathode active material may be improved or supplemented together at the anode 130. According to exemplary embodiments, as the anode active material, a graphite-based material having a interplanar distance (d002) of 3.356Å to 3.365Å may be included.

By adjusting the spacing between the crystal planes of the graphite-based material to 3.356 Å or more, capacity retention rate and lifespan characteristic after repeated charging and discharging can be increased. Addtionally, by adjusting the spacing between the crystal planes of the graphite-based material to 3.365 Å or less, excessive capacity degradation caused by increase of the spacing between the crystal planes can be suppressed.

In some embodiments, the graphite-based material used as the anode active material may include a mixture of graphites having different interplanar spacing. For example, the graphite-based material may include a mixture of a first graphite having a relatively small interplanar spacing and a second graphite having a relatively large interplanar spacing within the above-described overall interplanar spacing.

The spacing between the crystal planes of the first graphite may be 3.356Å to 3.360Å. The spacing between the crystal planes of the second graphite may be 3.361Å to 3.365Å. For example, an appropriate capacity of the anode 130 of the lithium secondary battery can be maintained through the first graphite while securing lifespan characteristic through the second graphite.

In some embodiments, a mixing ratio (weight ratio) of the first graphite and the second graphite may be 0: 100 to 90:10, and in one embodiment the mixing ratio may be 10:90 to 90:10. In a preferred embodiment, the mixing ratio of the first graphite and the second graphite may be 10:90 to 50:50. By controlling a content of the second graphite to be relatively larger than that of the first graphite, an appropriate capacity size can be maintained by using a natural graphite together while improving life sustaining performance in the anode 130.

In some embodiments, a natural graphite may be used as the first graphite and an artificial graphite may be used as the second graphite. A natural graphite may have relatively high capacity characteristic compared to an artificial graphite, but mechanical and chemical stability may be relatively low.

Therefore, by using an artificial graphite as a second graphite having a relatively large interplanar spacing, an effect of improving lifespan through the second graphite can be further amplified. Addtionally, as artificial graphite is included, high temperature stability of a lithium secondary battery may be increased, so that defects such as ignition, explosion, and the likes occurring when the lithium secondary battery is exposed to high temperature may be significantly reduced.

In one embodiment, a particle size or a crystal size of the graphite-based material may be about 5 to 30*µ*m.

In some embodiments, the anode active material may be mixed and stirred together with a binder, a conductive additive and/or a dispersive additive in a solvent to form an anode slurry. The anode slurry may be coated on at least one surface of the anode current collector 125, and pressed and dried to obtain the anode 130.

As the binder and the conductive additive of the anode slurry, materials substantially same or similar to those described above with respect to the cathode slurry may be used. In some embodiments, the binder for the anode 130 may include an aqueous binder such as such as styrene-butadiene rubber (SBR) that may be used with a thickener such as carboxymethyl cellulose (CMC) so that compatibility with the carbon-based active material may be improved.

The anode current collector 125 may include gold, stainless-steel, nickel, aluminum, titanium, copper or an alloy thereof, preferably, may include copper or a copper alloy.

The separator 140 may be interposed between the cathode 100 and the anode 130. The separator 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separator 140 may include a glass fiber with a high melting point and a non-woven fabric formed from a polyethylene terephthalate fiber, or the like.

In some embodiments, an area and/or a volume of the anode 130 (e.g., a contact area with the separator 140) may be greater than that of the cathode 100. Thus, lithium ions generated from the cathode 100 may be easily transferred to the anode 130 without loss by, e.g., precipitation or sedimentation. Therefore, the enhancement of capacity and power output may be effectively implemented.

In example embodiments, an electrode cell may be defined by the cathode 100, the anode 130 and the separator 140, and a plurality of the electrode cells 160 may be stacked to form an electrode assembly 150 having, e.g., a jelly roll shape. For example, the electrode assembly 150 may be formed by winding, laminating or folding of the separator 140.

The electrode assembly 150 may be accommodated in an outer case 160 together with an electrolyte to form the lithium secondary battery. In example embodiments, the electrolyte may include a non-aqueous electrolyte solution.

The non-aqueous electrolyte solution may include a lithium salt of an electrolyte and an organic solvent. The lithium salt may be represented by Li⁺X⁻, and an anion of the lithium salt X⁻ may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

As shown in FIG. 1, an electrode tab (a cathode tab and an anode tap) may be formed from each of the cathode current collector 105 and the anode current collector 125 to extend to one end of the outer case 160. The electrode tabs may be welded together with the one end of the outer case 160 to form an electrode lead (a cathode lead 107 and an anode lead 127) extend to or exposed at an outside of the outer case 160.

The lithium secondary battery may be fabricated into a cylindrical shape using a can, a prismatic shape, a pouch shape, a coin shape, etc.

According to the exemplary embodiments described above, a lithium metal oxide having a predetermined chemical composition ratio and concentration profile may be adopted as a cathode active material, and a graphite-based material having the above-described composition and crystal properties may be used as the anode active material. Therefore, a design in consideration of high capacity and long lifespan can be balancedly implemented in both the anode 100 and the cathode 130, and high temperature storage characteristics can be improved together.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

### Examples and Comparative Examples

### Example 1

### (1) Preparation of Cathode

A mixing ratio of precursors was continuously changed to prepare a precipitate having a total composition of LiNi_{0.80}Co_{0.11}Mn_{0.09}O₂, a composition of a central portion of LiNi_{0.825}Co_{0.11}Mn_{0.065}O₂, a composition of a surface portion of LiNi_{0.2}Co_{0.11}Mn_{0.69}O₂, and concentration gradients of Ni and Mn in a region between the central portion and the surface portion. Accordingly, a lithium metal oxide particle (average particle diameter (D50): 6.5µm) (may be referred as "A1" hereafter) having a continuous concentration gradient between the central portion and the surface portion was prepared as a cathode active material. The cathode active material, Denka Black (conductive material), and PVDF (binder) was mixed in a mass ratio of 92: 5: 3 to prepare a cathode slurry. The cathode slurry was coated on an aluminum substrate, dried and pressed to prepare a cathode.

The result of measuring a concentration change of each region of the lithium metal oxide is shown in Table 1 below. Specifically, a concentration of each metal element was measured at intervals of about 10nm from the outermost surface of the lithium metal oxide particle toward the central portion, and the measurement was stopped when the concentration was maintained constantly by entering the center through the concentration gradient region.

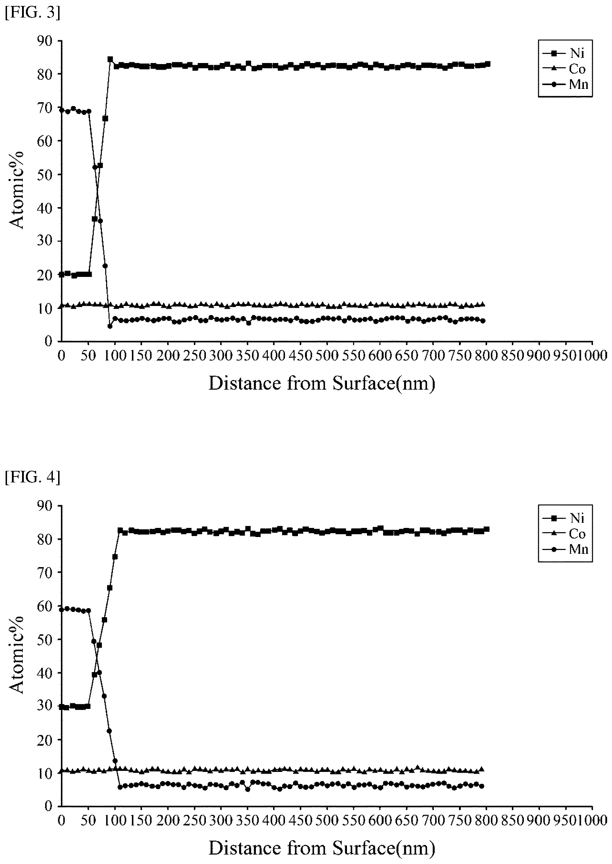

FIG. 3 is a concentration profile graph of metal elements included in the lithium metal oxide particle of Example 1 (A1). Referring to FIG. 3, the concentration gradient region of Ni and Mn was formed at a region in a range of about 40nm to 100nm. A content ratio of Ni with respect to Mn (Ni/Mn) in the surface was measured as 0.29.

**[Table 1]**

| Distance from the outermost surface (nm) | Ni (Atomic %) | Co (Atomic %) | Mn (Atomic %) |
|---|---|---|---|
| 0 | 20 | 11.00 | 69.00 |
| 10 | 20.3 | 11.00 | 68.70 |
| 20 | 19.8 | 10.60 | 69.60 |
| 30 | 20.1 | 11.25 | 68.65 |
| 40 | 20 | 11.40 | 68.60 |
| 50 | 20 | 11.32 | 68.68 |
| 60 | 36.6 | 11.25 | 52.15 |
| 70 | 52.6 | 11.30 | 36.10 |
| 80 | 66.7 | 10.86 | 22.44 |
| 90 | 84.3 | 11.25 | 4.45 |
| 100 | 82.3 | 10.60 | 7.10 |
| 110 | 82.7 | 10.80 | 6.50 |
| 120 | 82.4 | 11.40 | 6.20 |
| 130 | 82.6 | 11.00 | 6.40 |
| 140 | 82.5 | 10.90 | 6.60 |
| 150 | 82.2 | 10.70 | 7.10 |
| 160 | 82.3 | 11.00 | 6.70 |
| 170 | 82.40 | 11.32 | 6.28 |
| 180 | 82.1 | 11.32 | 6.58 |
| 190 | 82.1 | 10.86 | 7.04 |
| 200 | 82.4 | 10.60 | 7.00 |
| 210 | 82.8 | 11.25 | 5.95 |
| 220 | 82.8 | 11.25 | 5.95 |
| 230 | 82.5 | 11.00 | 6.50 |
| 240 | 82.6 | 10.60 | 6.80 |
| 250 | 81.9 | 10.80 | 7.30 |
| 260 | 82.4 | 11.32 | 6.28 |
| 271 | 82.5 | 11.30 | 6.20 |
| 281 | 82.0 | 10.86 | 7.14 |
| 291 | 81.9 | 11.50 | 6.60 |
| 301 | 82.50 | 11.00 | 6.50 |
| 311 | 82.8 | 10.60 | 6.60 |
| 321 | 81.9 | 11.16 | 6.94 |
| 331 | 82.3 | 11.32 | 6.38 |
| 341 | 81.90 | 11.25 | 6.85 |
| 351 | 83.20 | 11.32 | 5.48 |
| 361 | 81.80 | 11.00 | 7.20 |
| 371 | 82.0 | 11.00 | 7.00 |
| 381 | 82.4 | 10.80 | 6.80 |
| 391 | 82.40 | 10.86 | 6.74 |
| 401 | 82.4 | 11.16 | 6.44 |
| 411 | 82.0 | 11.45 | 6.55 |
| 421 | 82.10 | 11.25 | 6.65 |
| 431 | 82.70 | 10.80 | 6.50 |
| 441 | 82.0 | 10.90 | 7.10 |
| 451 | 82.4 | 11.32 | 6.28 |
| 461 | 83.00 | 11.00 | 6.00 |
| 471 | 82.40 | 11.25 | 6.35 |
| 481 | 82.60 | 10.86 | 6.54 |
| 491 | 81.90 | 11.16 | 6.94 |
| 501 | 82.40 | 10.60 | 7.00 |
| 511 | 82.60 | 10.57 | 6.83 |
| 521 | 82.40 | 10.60 | 7.00 |
| 531 | 82.4 | 11.32 | 6.28 |
| 541 | 81.90 | 11.00 | 7.10 |
| 551 | 82.50 | 11.00 | 6.50 |
| 561 | 82.8 | 10.80 | 6.40 |
| 571 | 82.60 | 10.70 | 6.70 |
| 581 | 81.9 | 11.32 | 6.78 |
| 591 | 82.90 | 11.00 | 6.10 |
| 601 | 82.40 | 11.20 | 6.40 |
| 611 | 81.90 | 11.25 | 6.85 |
| 621 | 82.10 | 10.90 | 7.00 |
| 631 | 82.00 | 10.80 | 7.20 |
| 641 | 82.40 | 10.60 | 7.00 |
| 651 | 82.7 | 11.25 | 6.05 |
| 661 | 82.2 | 11.00 | 6.80 |
| 671 | 81.9 | 11.45 | 6.65 |
| 681 | 82.70 | 11.20 | 6.10 |
| 691 | 82.70 | 10.90 | 6.40 |
| 701 | 82.5 | 10.90 | 6.60 |
| 711 | 82.2 | 10.86 | 6.94 |
| 721 | 81.9 | 10.90 | 7.20 |
| 731 | 82.50 | 11.32 | 6.18 |
| 741 | 82.90 | 11.20 | 5.90 |
| 751 | 82.80 | 10.60 | 6.60 |
| 761 | 82.2 | 11.00 | 6.80 |
| 771 | 82.2 | 10.90 | 6.90 |
| 781 | 82.4 | 11.00 | 6.60 |
| 792 | 82.50 | 11.00 | 6.50 |

### (2) Preparation of Anode

An anode slurry including 93% by weight of natural graphite (d002: 3.358Å) as a anode active material, 5% by weight of KS6 as a flake type conductive material, 1% by weight of a SBR as a binder, and 1% by weight of a CMC as a thickener was coated on a copper substrate, dried and pressed to prepare an anode electrode.

### (3) Preparation of Lithium Secondary Battery

The cathode and the anode obtained as described above were notched with a proper size and stacked, and a separator (polyethylene, thickness: 25µm) was interposed between the cathode and the anode to form an electrode cell. Each tab portion of the cathode and the anode was welded. The welded cathode/separator/anode assembly was inserted in a pouch, and three sides of the pouch (e.g., except for an electrolyte injection side) were sealed. The tab portions were also included in sealed portions. An electrolyte was injected through the electrolyte injection side, and then the electrolyte injection side was also sealed. Subsequently, the above structure was impregnated for more than 12 hours.

The electrolyte was prepared by dissolving 1M LiPF₆ in a mixed solvent of EC/EMC/DEC (25/45/30; volume ratio), and then 1 wt% of vinylene carbonate, 0.5 wt% of 1,3-propenesultone (PRS), and 0.5 wt% of lithium bis(oxalato)borate (LiBOB) were added.

The lithium secondary battery as fabricated above was pre-charged by applying a pre-charging current (5 A) corresponding to 0.25 C for 36 minutes. After 1 hour, the battery was degased, aged for more than 24 hours, and then a formation charging-discharging (charging condition: CC-CV 0.2 C 4.2 V 0.05 C CUT-OFF, discharging condition: CC 0.2 C 2.5 V CUT-OFF) was performed. Then, a standard charging-discharging (charging condition: CC-CV 0.5 C 4.2 V 0.05 C CUT-OFF, discharging condition: CC 0.5 C 2.5 V CUT-OFF) was performed.

### Example 2 to Example 7

Lithium secondary batteries were manufactured through the same process as in Example 1, except for using a mixture of a natural graphite (d002: 3.358Å) (first graphite) and an artificial graphite (d002: 3.363Å) (second graphite) as the anode active material. The mixing ratio of a natural graphite and an artificial graphite is shown in Table 9 below.

### Example 8

A lithium secondary battery was manufactured through the same process as in Example 1, except that a lithium metal oxide particle (may be referred as "A2" hereafter) were prepared to have a total composition of LiNi_{0.80}Co_{0.11}Mn_{0.09}O₂, a composition of a central portion of LiNi_{0.825}Co_{0.11}Mn_{0.065}O₂, and a composition of a surface portion of LiNi_{0.3}Co_{0.11}Mn_{0.59}O₂ as a cathode active material.

The concentration distribution of the lithium metal oxide particle was measured in the same manner as in Example 1, and the measured result is shown in Table 2 below.

FIG. 4 is a concentration profile graph of metal elements included in the lithium metal oxide particle of Example 8 (A2). Referring to FIG. 4, the concentration gradient region of Ni and Mn was formed at a region in a range of about 40nm to 120nm. A content ratio of Ni with respect to Mn (Ni/Mn) in the surface was measured as 0.51.

**[Table 2]**

| Distance from the outermost surface (nm) | Ni (Atomic %) | Co (Atomic %) | Mn (Atomic %) |
|---|---|---|---|
| 0 | 30 | 11.00 | 59.00 |
| 10 | 29.8 | 11.00 | 59.20 |
| 20 | 30.2 | 10.60 | 59.20 |
| 30 | 29.9 | 11.10 | 59.00 |
| 40 | 30 | 11.40 | 58.60 |
| 50 | 30.2 | 11.00 | 58.80 |
| 60 | 39.5 | 10.90 | 49.65 |
| 70 | 48.4 | 11.30 | 40.30 |
| 80 | 56.0 | 10.86 | 33.19 |
| 90 | 65.7 | 11.40 | 22.90 |
| 100 | 74.8 | 11.32 | 13.93 |
| 110 | 82.7 | 11.32 | 5.98 |
| 120 | 82.1 | 11.40 | 6.50 |
| 130 | 82.6 | 11.00 | 6.40 |
| 140 | 82.5 | 10.90 | 6.60 |
| 150 | 82.2 | 10.70 | 7.10 |
| 160 | 82.3 | 11.00 | 6.70 |
| 170 | 82.40 | 11.32 | 6.28 |
| 180 | 82.7 | 11.32 | 5.98 |
| 190 | 82.1 | 10.86 | 7.04 |
| 200 | 82.4 | 10.60 | 7.00 |
| 210 | 82.8 | 10.60 | 6.60 |
| 220 | 82.8 | 10.57 | 6.63 |
| 230 | 82.5 | 11.40 | 6.10 |
| 240 | 82.6 | 10.60 | 6.80 |
| 250 | 81.9 | 11.60 | 6.50 |
| 260 | 82.4 | 11.32 | 6.28 |
| 271 | 83.1 | 11.30 | 5.60 |
| 281 | 82.3 | 10.86 | 6.84 |
| 291 | 81.9 | 11.50 | 6.60 |
| 301 | 82.50 | 11.00 | 6.50 |
| 311 | 82.8 | 11.40 | 5.80 |
| 321 | 81.9 | 11.16 | 6.94 |
| 331 | 82.3 | 11.32 | 6.38 |
| 341 | 81.90 | 10.70 | 7.40 |
| 351 | 83.20 | 11.32 | 5.48 |
| 361 | 81.80 | 10.86 | 7.34 |
| 371 | 81.60 | 11.00 | 7.40 |
| 381 | 82.4 | 10.80 | 6.80 |
| 391 | 82.40 | 10.86 | 6.74 |
| 401 | 82.90 | 11.16 | 5.94 |
| 411 | 83.30 | 11.30 | 5.40 |
| 421 | 82.10 | 11.60 | 6.30 |
| 431 | 82.70 | 11.32 | 5.98 |
| 441 | 81.9 | 10.90 | 7.20 |
| 451 | 82.4 | 11.32 | 6.28 |
| 461 | 83.00 | 11.16 | 5.84 |
| 471 | 82.70 | 11.16 | 6.14 |
| 481 | 82.40 | 10.86 | 6.74 |
| 491 | 81.90 | 11.16 | 6.94 |
| 501 | 82.40 | 11.16 | 6.44 |
| 511 | 82.60 | 10.57 | 6.83 |
| 521 | 82.40 | 10.60 | 7.00 |
| 531 | 82.4 | 11.32 | 6.28 |
| 541 | 81.90 | 11.00 | 7.10 |
| 551 | 82.50 | 11.60 | 5.90 |
| 561 | 82.40 | 10.90 | 6.70 |
| 571 | 82.70 | 10.70 | 6.60 |
| 581 | 81.9 | 11.32 | 6.78 |
| 591 | 82.90 | 11.00 | 6.10 |
| 601 | 83.20 | 11.20 | 5.60 |
| 611 | 81.90 | 10.86 | 7.24 |
| 621 | 82.10 | 10.90 | 7.00 |
| 631 | 82.00 | 11.32 | 6.68 |
| 641 | 82.40 | 10.60 | 7.00 |
| 651 | 82.7 | 11.32 | 5.98 |
| 661 | 82.50 | 11.00 | 6.50 |
| 671 | 81.70 | 12.00 | 6.30 |
| 681 | 82.70 | 11.20 | 6.10 |
| 691 | 82.70 | 10.90 | 6.40 |
| 701 | 82.20 | 10.90 | 6.90 |
| 711 | 82.2 | 10.86 | 6.94 |
| 721 | 81.9 | 10.90 | 7.20 |
| 731 | 82.50 | 11.32 | 6.18 |
| 741 | 82.90 | 11.20 | 5.90 |
| 751 | 82.80 | 11.00 | 6.20 |
| 761 | 82.2 | 11.00 | 6.80 |
| 771 | 82.60 | 10.90 | 6.50 |
| 781 | 82.4 | 10.86 | 6.74 |
| 792 | 82.50 | 11.00 | 6.50 |

### Example 9 to Example 14

Lithium secondary batteries were manufactured through the same process as in Example 8, except for using a mixture of a natural graphite (d002: 3.358Å) (first graphite) and an artificial graphite (d002: 3.363Å) (second graphite) as the anode active material. The mixing ratio of a natural graphite and an artificial graphite is shown in Table 9 below.

### Example 15

A lithium secondary battery was manufactured through the same process as in Example 1, except that a lithium metal oxide particle (may be referred as "A3" hereafter) were prepared to have a total composition of LiNi_{0.80}Co_{0.11}Mn_{0.09}O₂, a composition of a central portion of LiNi_{0.825}Co_{0.11}Mn_{0.065}O₂, and a composition of a surface portion of LiNi_{0.4}Co_{0.106}Mn_{0.494}O₂ as a cathode active material.

The concentration distribution of the lithium metal oxide particle was measured in the same manner as in Example 1, and the measured result is shown in Table 3 below.

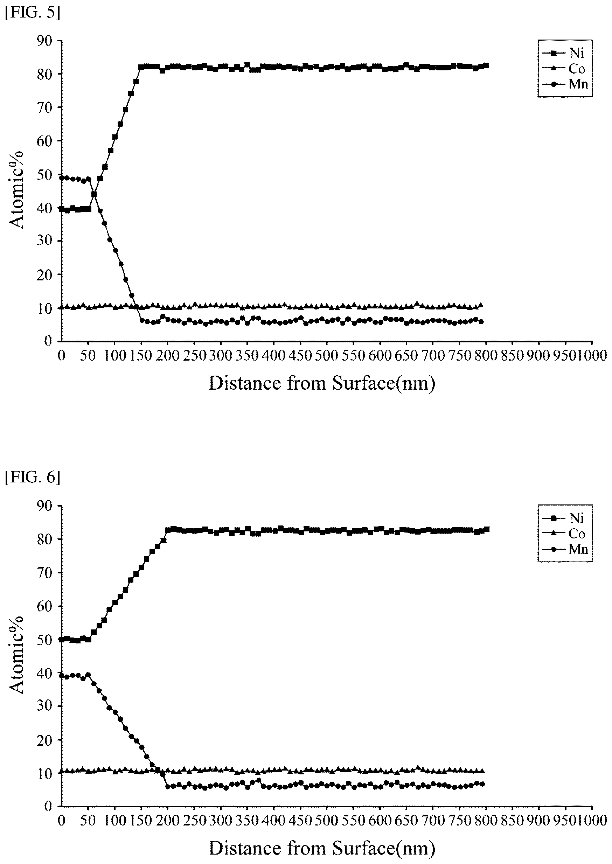

FIG. 5 is a concentration profile graph of metal elements included in the lithium metal oxide particle of Example 15 (A3). Referring to FIG. 5, the concentration gradient region of Ni and Mn was formed at a region in a range of about 40nm to 150nm. A content ratio of Ni with respect to Mn (Ni/Mn) in the surface was measured as 0.81.

**[Table 3]**

| Distance from the outermost surface (nm) | Ni (Atomic %) | Co (Atomic %) | Mn (Atomic %) |
|---|---|---|---|
| 0 | 40 | 10.60 | 49.40 |
| 10 | 39.5 | 11.00 | 49.50 |
| 20 | 40.3 | 10.60 | 49.10 |
| 30 | 39.8 | 11.10 | 49.10 |
| 40 | 40.1 | 11.40 | 48.50 |
| 50 | 40.2 | 10.60 | 49.20 |
| 60 | 44.7 | 10.90 | 44.45 |
| 70 | 49.2 | 11.30 | 39.50 |
| 80 | 52.8 | 11.30 | 35.95 |
| 90 | 57.7 | 11.40 | 30.90 |
| 100 | 61.8 | 10.60 | 27.65 |
| 110 | 65.5 | 11.00 | 23.50 |
| 120 | 69.8 | 11.40 | 18.85 |
| 130 | 74.7 | 11.00 | 14.30 |
| 140 | 78.4 | 10.90 | 10.75 |
| 150 | 82.5 | 10.70 | 6.80 |
| 160 | 82.7 | 11.00 | 6.30 |
| 170 | 82.6 | 11.32 | 6.08 |
| 180 | 82.7 | 11.20 | 6.10 |
| 190 | 81.4 | 10.70 | 7.90 |
| 200 | 82.4 | 10.60 | 7.00 |
| 210 | 82.8 | 10.60 | 6.60 |
| 220 | 82.8 | 10.57 | 6.63 |
| 230 | 82.5 | 11.40 | 6.10 |
| 240 | 82.6 | 10.60 | 6.80 |
| 250 | 82.4 | 11.60 | 6.00 |
| 260 | 82.7 | 11.00 | 6.30 |
| 271 | 83.1 | 11.30 | 5.60 |
| 281 | 82.3 | 11.40 | 6.30 |
| 291 | 81.9 | 11.50 | 6.60 |
| 301 | 82.6 | 11.00 | 6.40 |
| 311 | 82.8 | 11.40 | 5.80 |
| 321 | 82.0 | 11.16 | 6.84 |
| 331 | 82.60 | 11.32 | 6.08 |
| 341 | 81.90 | 10.70 | 7.40 |
| 351 | 83.20 | 11.00 | 5.80 |
| 361 | 81.80 | 10.86 | 7.34 |
| 371 | 81.60 | 11.00 | 7.40 |
| 381 | 82.90 | 10.80 | 6.30 |
| 391 | 82.70 | 11.20 | 6.10 |
| 401 | 82.40 | 11.16 | 6.44 |
| 411 | 82.90 | 11.30 | 5.80 |
| 421 | 82.40 | 11.60 | 6.00 |
| 431 | 82.70 | 10.80 | 6.50 |
| 441 | 82.20 | 10.90 | 6.90 |
| 451 | 81.90 | 10.60 | 7.50 |
| 461 | 82.90 | 11.16 | 5.94 |
| 471 | 82.40 | 11.16 | 6.44 |
| 481 | 82.80 | 10.78 | 6.42 |
| 491 | 81.90 | 11.16 | 6.94 |
| 501 | 82.40 | 11.16 | 6.44 |
| 511 | 82.60 | 10.57 | 6.83 |
| 521 | 82.40 | 10.60 | 7.00 |
| 531 | 82.90 | 11.16 | 5.94 |
| 541 | 81.90 | 11.00 | 7.10 |
| 551 | 82.50 | 11.60 | 5.90 |
| 561 | 82.40 | 10.90 | 6.70 |
| 571 | 82.80 | 10.70 | 6.50 |
| 581 | 82.00 | 11.00 | 7.00 |
| 591 | 82.90 | 11.00 | 6.10 |
| 601 | 82.80 | 11.20 | 6.00 |
| 611 | 81.90 | 10.70 | 7.40 |
| 621 | 82.10 | 10.90 | 7.00 |
| 631 | 82.00 | 11.00 | 7.00 |
| 641 | 82.40 | 10.60 | 7.00 |
| 651 | 83.20 | 10.86 | 5.94 |
| 661 | 82.50 | 11.00 | 6.50 |
| 671 | 81.70 | 12.00 | 6.30 |
| 681 | 82.70 | 11.20 | 6.10 |
| 691 | 82.70 | 10.90 | 6.40 |
| 701 | 82.20 | 10.90 | 6.90 |
| 711 | 82.50 | 10.86 | 6.64 |
| 721 | 82.40 | 10.90 | 6.70 |
| 731 | 82.50 | 11.32 | 6.18 |
| 741 | 82.90 | 11.20 | 5.90 |
| 751 | 82.80 | 11.00 | 6.20 |
| 761 | 82.70 | 11.00 | 6.30 |
| 771 | 82.60 | 10.90 | 6.50 |
| 781 | 82.10 | 10.86 | 7.04 |
| 792 | 82.50 | 11.00 | 6.50 |

### Example 16 to Example 21

Lithium secondary batteries were manufactured through the same process as in Example 15, except for using a mixture of a natural graphite (d002: 3.358Å) (first graphite) and an artificial graphite (d002: 3.363Å) (second graphite) as the anode active material. The mixing ratio of a natural graphite and an artificial graphite is shown in Table 9 below.

### Example 22

A lithium secondary battery was manufactured through the same process as in Example 1, except that a lithium metal oxide particle (may be referred as "A4" hereafter) were prepared to have a total composition of LiNi_{0.80}Co_{0.11}Mn_{0.09}O₂, a composition of a central portion of LiNi_{0.825}Co_{0.11}Mn_{0.065}O₂, and a composition of a surface portion of LiNi_{0.5}Co_{0.106}Mn_{0.394}O₂ as a cathode active material.

The concentration distribution of the lithium metal oxide particle was measured in the same manner as in Example 1, and the measured result is shown in Table 4 below.

FIG. 6 is a concentration profile graph of metal elements included in the lithium metal oxide particle of Example 22 (A4). Referring to FIG. 6, the concentration gradient region of Ni and Mn was formed at a region in a range of about 50nm to 200nm. A content ratio of Ni with respect to Mn (Ni/Mn) in the surface was measured as 1.27.

**[Table 4]**

| Distance from the outermost surface (nm) | Ni (Atomic %) | Co (Atomic %) | Mn (Atomic %) |
|---|---|---|---|
| 0 | 50 | 10.60 | 39.40 |
| 10 | 50.3 | 10.80 | 38.90 |
| 20 | 50.1 | 10.60 | 39.30 |
| 30 | 49.6 | 11.10 | 39.30 |
| 40 | 50.3 | 11.40 | 38.30 |
| 50 | 49.9 | 10.60 | 39.50 |
| 60 | 52.3 | 10.90 | 36.83 |
| 70 | 54.0 | 11.30 | 34.66 |
| 80 | 56.2 | 11.30 | 32.49 |
| 90 | 59.1 | 11.40 | 29.52 |
| 100 | 61.1 | 10.60 | 28.35 |
| 110 | 62.7 | 11.00 | 26.28 |
| 120 | 64.9 | 11.40 | 23.71 |
| 130 | 67.8 | 11.00 | 21.24 |
| 140 | 69.3 | 10.90 | 19.77 |
| 150 | 71.4 | 10.70 | 17.90 |
| 160 | 74.0 | 11.00 | 15.03 |
| 170 | 76.2 | 11.00 | 12.76 |
| 180 | 77.9 | 11.20 | 10.89 |
| 190 | 79.4 | 10.70 | 9.92 |
| 200 | 82.8 | 11.16 | 6.09 |
| 210 | 83.1 | 10.60 | 6.30 |
| 220 | 82.8 | 10.57 | 6.63 |
| 230 | 82.5 | 11.40 | 6.10 |
| 240 | 82.6 | 10.60 | 6.80 |
| 250 | 82.4 | 11.60 | 6.00 |
| 260 | 82.7 | 11.00 | 6.30 |
| 271 | 83.1 | 11.30 | 5.60 |
| 281 | 82.3 | 11.40 | 6.30 |
| 291 | 81.9 | 11.50 | 6.60 |
| 301 | 82.6 | 11.00 | 6.40 |
| 311 | 82.8 | 11.40 | 5.80 |
| 321 | 82.0 | 11.16 | 6.84 |
| 331 | 82.60 | 10.50 | 6.90 |
| 341 | 81.90 | 10.70 | 7.40 |
| 351 | 83.20 | 11.00 | 5.80 |
| 361 | 81.80 | 10.86 | 7.34 |
| 371 | 81.60 | 10.40 | 8.00 |
| 381 | 82.90 | 10.80 | 6.30 |
| 391 | 82.70 | 11.20 | 6.10 |
| 401 | 82.40 | 11.16 | 6.44 |
| 411 | 82.90 | 11.30 | 5.80 |
| 421 | 82.40 | 11.60 | 6.00 |
| 431 | 82.70 | 10.80 | 6.50 |
| 441 | 82.20 | 10.90 | 6.90 |
| 451 | 81.90 | 10.60 | 7.50 |
| 461 | 82.90 | 11.16 | 5.94 |
| 471 | 82.40 | 11.16 | 6.44 |
| 481 | 82.80 | 10.78 | 6.42 |
| 491 | 81.90 | 11.16 | 6.94 |
| 501 | 82.40 | 11.16 | 6.44 |
| 511 | 82.60 | 10.57 | 6.83 |
| 521 | 82.40 | 11.38 | 6.22 |
| 531 | 82.90 | 11.16 | 5.94 |
| 541 | 81.90 | 11.16 | 6.94 |
| 551 | 82.50 | 11.60 | 5.90 |
| 561 | 82.40 | 10.90 | 6.70 |
| 571 | 82.80 | 10.70 | 6.50 |
| 581 | 82.00 | 11.00 | 7.00 |
| 591 | 82.90 | 11.00 | 6.10 |
| 601 | 82.80 | 11.20 | 6.00 |
| 611 | 81.90 | 10.70 | 7.40 |
| 621 | 82.40 | 10.90 | 6.70 |
| 631 | 82.10 | 10.40 | 7.50 |
| 641 | 82.80 | 11.20 | 6.00 |
| 651 | 82.70 | 10.86 | 6.44 |
| 661 | 82.20 | 11.00 | 6.80 |
| 671 | 82.10 | 12.00 | 5.90 |
| 681 | 82.40 | 11.20 | 6.40 |
| 691 | 82.90 | 10.90 | 6.20 |
| 701 | 82.20 | 10.90 | 6.90 |
| 711 | 82.50 | 10.86 | 6.64 |
| 721 | 82.40 | 10.90 | 6.70 |
| 731 | 82.50 | 11.32 | 6.18 |
| 741 | 82.90 | 11.20 | 5.90 |
| 751 | 82.80 | 11.20 | 6.00 |
| 761 | 82.70 | 11.00 | 6.30 |
| 771 | 82.60 | 10.90 | 6.50 |
| 781 | 82.10 | 10.86 | 7.04 |
| 792 | 82.50 | 11.00 | 6.50 |

### Example 23 to Example 28

Lithium secondary batteries were manufactured through the same process as in Example 22, except for using a mixture of a natural graphite (d002: 3.358Å) (first graphite) and an artificial graphite (d002: 3.363Å) (second graphite) as the anode active material. The mixing ratio of a natural graphite and an artificial graphite is shown in Table 9 below.

### Example 29

A lithium secondary battery was manufactured through the same process as in Example 1, except that a lithium metal oxide particle (may be referred as "A5" hereafter) were prepared to have a total composition of LiNi_{0.80}Co_{0.11}Mn_{0.09}O₂, a composition of a central portion of LiNi_{0.825}Co_{0.11}Mn_{0.065}O₂, and a composition of a surface portion of LiNi_{0.6}Co_{0.107}Mn_{0.293}O₂ as a cathode active material.

The concentration distribution of the lithium metal oxide particle was measured in the same manner as in Example 1, and the measured result is shown in Table 5 below.

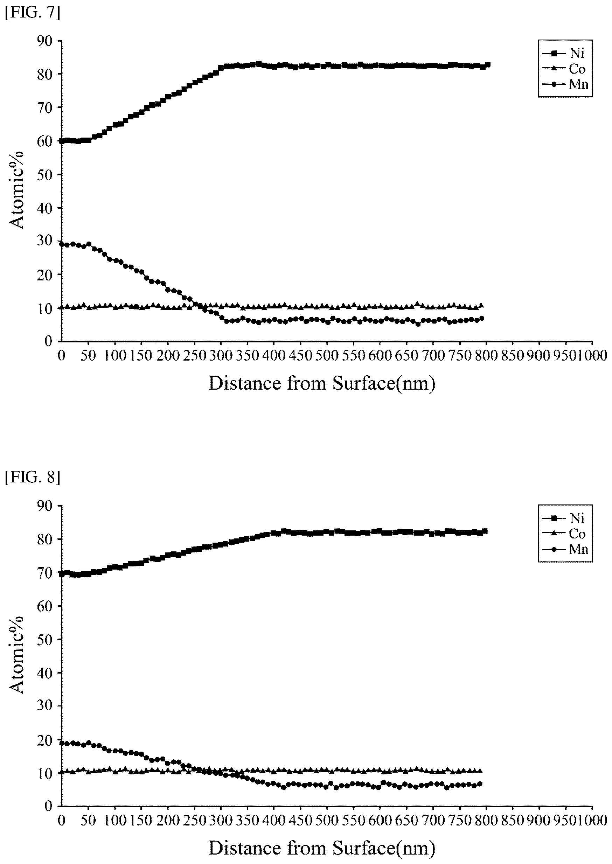

FIG. 7 is a concentration profile graph of metal elements included in the lithium metal oxide particle of Example 29 (A5). Referring to FIG. 7, the concentration gradient region of Ni and Mn was formed at a region in a range of about 40nm to 320nm. A content ratio of Ni with respect to Mn (Ni/Mn) in the surface was measured as 2.05.

**[Table 5]**

| Distance from the outermost surface (nm) | Ni (Atomic %) | Co (Atomic %) | Mn (Atomic %) |
|---|---|---|---|
| 0 | 60 | 10.70 | 29.30 |
| 10 | 60.2 | 10.80 | 29.00 |
| 20 | 60.1 | 10.60 | 29.30 |
| 30 | 59.8 | 11.20 | 29.00 |
| 40 | 60 | 11.40 | 28.60 |
| 50 | 60.2 | 10.60 | 29.20 |
| 60 | 61.3 | 10.90 | 27.85 |
| 70 | 61.7 | 11.00 | 27.30 |
| 80 | 62.6 | 11.30 | 26.15 |
| 90 | 63.8 | 11.40 | 24.80 |
| 100 | 64.8 | 10.90 | 24.35 |
| 110 | 65.1 | 11.00 | 23.90 |
| 120 | 66.0 | 11.40 | 22.65 |
| 130 | 67.2 | 10.60 | 22.20 |
| 140 | 67.8 | 10.90 | 21.35 |
| 150 | 68.5 | 10.70 | 20.80 |
| 160 | 69.8 | 11.00 | 19.25 |
| 170 | 70.7 | 11.30 | 18.00 |
| 180 | 71.1 | 11.20 | 17.75 |
| 190 | 71.9 | 10.70 | 17.40 |
| 200 | 73.2 | 11.16 | 15.59 |
| 210 | 74.0 | 10.60 | 15.40 |
| 220 | 74.4 | 10.57 | 14.98 |
| 230 | 75.4 | 11.40 | 13.20 |
| 240 | 76.5 | 10.60 | 12.85 |
| 250 | 77.5 | 11.16 | 11.34 |
| 260 | 78.1 | 11.00 | 10.85 |
| 271 | 79.1 | 11.30 | 9.60 |
| 281 | 79.6 | 11.40 | 8.95 |
| 291 | 80.4 | 10.90 | 8.70 |
| 301 | 81.6 | 11.00 | 7.35 |
| 311 | 82.5 | 11.40 | 6.10 |
| 321 | 82.5 | 11.16 | 6.34 |
| 331 | 82.60 | 10.90 | 6.50 |
| 341 | 82.40 | 10.70 | 6.90 |
| 351 | 82.40 | 11.00 | 6.60 |
| 361 | 82.90 | 10.86 | 6.24 |
| 371 | 83.00 | 11.20 | 5.80 |
| 381 | 82.60 | 10.80 | 6.60 |
| 391 | 82.40 | 11.20 | 6.40 |
| 401 | 82.10 | 11.16 | 6.74 |
| 411 | 82.60 | 11.30 | 6.10 |
| 421 | 82.90 | 11.16 | 5.94 |
| 431 | 82.40 | 10.80 | 6.80 |
| 441 | 82.10 | 10.90 | 7.00 |
| 451 | 82.40 | 10.60 | 7.00 |
| 461 | 82.60 | 11.16 | 6.24 |
| 471 | 82.10 | 11.16 | 6.74 |
| 481 | 82.50 | 10.78 | 6.72 |
| 491 | 82.30 | 11.16 | 6.54 |
| 501 | 82.90 | 11.16 | 5.94 |
| 511 | 82.30 | 10.57 | 7.13 |
| 521 | 82.10 | 11.38 | 6.52 |
| 531 | 82.60 | 11.16 | 6.24 |
| 541 | 82.40 | 11.16 | 6.44 |
| 551 | 82.40 | 10.60 | 7.00 |
| 561 | 82.90 | 10.90 | 6.20 |
| 571 | 82.50 | 10.70 | 6.80 |
| 581 | 82.40 | 11.00 | 6.60 |
| 591 | 82.60 | 11.30 | 6.10 |
| 601 | 82.50 | 11.20 | 6.30 |
| 611 | 82.40 | 10.70 | 6.90 |
| 621 | 82.30 | 10.90 | 6.80 |
| 631 | 82.60 | 11.00 | 6.40 |
| 641 | 82.70 | 11.20 | 6.10 |
| 651 | 82.40 | 10.86 | 6.74 |
| 661 | 82.70 | 11.00 | 6.30 |
| 671 | 82.50 | 12.00 | 5.50 |
| 681 | 82.30 | 11.20 | 6.50 |
| 691 | 82.60 | 10.86 | 6.54 |
| 701 | 82.70 | 10.90 | 6.40 |
| 711 | 82.40 | 10.86 | 6.74 |
| 721 | 82.10 | 10.90 | 7.00 |
| 731 | 82.90 | 11.32 | 5.78 |
| 741 | 82.60 | 11.20 | 6.20 |
| 751 | 82.50 | 11.20 | 6.30 |
| 761 | 82.40 | 11.00 | 6.60 |
| 771 | 82.30 | 10.90 | 6.80 |
| 781 | 82.60 | 10.86 | 6.54 |
| 792 | 82.50 | 11.00 | 6.50 |

### Example 30 to Example 35

Lithium secondary batteries were manufactured through the same process as in Example 29, except for using a mixture of a natural graphite (d002: 3.358Å) (first graphite) and an artificial graphite (d002: 3.363Å) (second graphite) as the anode active material. The mixing ratio of a natural graphite and an artificial graphite is shown in Table 9 below.

### Example 36

A lithium secondary battery was manufactured through the same process as in Example 1, except that a lithium metal oxide particle (may be referred as "A6" hereafter) were prepared to have a total composition of LiNi_{0.80}Co_{0.11}Mn_{0.09}O₂, a composition of a central portion of LiNi_{0.825}Co_{0.11}Mn_{0.065}O₂, and a composition of a surface portion of LiNi_{0.7}Co_{0.107}Mn_{0.193}O₂ as a cathode active material.

The concentration distribution of the lithium metal oxide particle was measured in the same manner as in Example 1, and the measured result is shown in Table 6 below.

FIG. 8 is a concentration profile graph of metal elements included in the lithium metal oxide particle of Example 36 (A6). Referring to FIG. 8, the concentration gradient region of Ni and Mn was formed at a region in a range of about 40nm to 500nm. A content ratio of Ni with respect to Mn (Ni/Mn) in the surface was measured as 3.63.

**[Table 6]**

| Distance from the outermost surface (nm) | Ni (Atomic %) | Co (Atomic %) | Mn (Atomic %) |
|---|---|---|---|
| 0 | 70 | 10.70 | 19.30 |
| 10 | 70.2 | 10.80 | 19.00 |
| 20 | 70.1 | 10.60 | 19.30 |
| 30 | 69.8 | 11.20 | 19.00 |
| 40 | 70 | 11.40 | 18.60 |
| 50 | 70.1 | 10.60 | 19.30 |
| 60 | 70.7 | 10.90 | 18.45 |
| 70 | 70.6 | 11.00 | 18.40 |
| 80 | 71.0 | 11.30 | 17.75 |
| 90 | 71.7 | 11.40 | 16.90 |
| 100 | 72.2 | 10.90 | 16.95 |
| 110 | 72.0 | 11.00 | 17.00 |
| 120 | 72.4 | 11.40 | 16.25 |
| 130 | 73.1 | 10.60 | 16.30 |
| 140 | 73.1 | 10.90 | 15.95 |
| 150 | 73.4 | 10.70 | 15.90 |
| 160 | 74.1 | 11.00 | 14.85 |
| 170 | 74.6 | 11.30 | 14.10 |
| 180 | 74.4 | 11.20 | 14.35 |
| 190 | 74.8 | 10.70 | 14.50 |
| 200 | 75.6 | 11.16 | 13.19 |
| 210 | 75.9 | 10.60 | 13.50 |
| 220 | 75.8 | 10.57 | 13.58 |
| 230 | 76.3 | 11.40 | 12.30 |
| 240 | 76.9 | 10.60 | 12.45 |
| 250 | 77.4 | 11.16 | 11.44 |
| 260 | 77.5 | 11.00 | 11.45 |
| 271 | 78.0 | 11.30 | 10.70 |
| 281 | 78.0 | 11.40 | 10.55 |
| 291 | 78.4 | 10.90 | 10.70 |
| 301 | 78.7 | 11.00 | 10.25 |
| 311 | 79.1 | 11.40 | 9.50 |
| 321 | 79.4 | 11.00 | 9.55 |
| 331 | 79.8 | 10.60 | 9.60 |
| 341 | 80.1 | 10.80 | 9.05 |
| 351 | 80.5 | 11.00 | 8.50 |
| 361 | 80.8 | 11.00 | 8.15 |
| 371 | 81.2 | 11.20 | 7.60 |
| 381 | 81.5 | 10.80 | 7.65 |
| 391 | 81.9 | 11.20 | 6.90 |
| 401 | 82.2 | 10.60 | 7.15 |
| 411 | 82.10 | 11.30 | 6.60 |
| 421 | 82.90 | 11.16 | 5.94 |
| 431 | 82.40 | 10.80 | 6.80 |
| 441 | 82.10 | 10.90 | 7.00 |
| 451 | 82.40 | 10.80 | 6.80 |
| 461 | 82.30 | 11.16 | 6.54 |
| 471 | 82.10 | 11.16 | 6.74 |
| 481 | 82.50 | 10.78 | 6.72 |
| 491 | 82.30 | 11.00 | 6.70 |
| 501 | 82.90 | 11.16 | 5.94 |
| 511 | 82.30 | 10.57 | 7.13 |
| 521 | 83.00 | 11.38 | 5.62 |
| 531 | 82.60 | 11.00 | 6.40 |
| 541 | 82.40 | 11.16 | 6.44 |
| 551 | 82.40 | 10.60 | 7.00 |
| 561 | 82.10 | 10.90 | 7.00 |
| 571 | 82.50 | 10.70 | 6.80 |
| 581 | 82.40 | 11.00 | 6.60 |
| 591 | 82.60 | 11.30 | 6.10 |
| 601 | 83.00 | 11.20 | 5.80 |
| 611 | 82.40 | 10.70 | 6.90 |
| 621 | 82.30 | 10.90 | 6.80 |
| 631 | 82.60 | 11.00 | 6.40 |
| 641 | 82.70 | 11.20 | 6.10 |
| 651 | 82.40 | 10.86 | 6.74 |
| 661 | 82.70 | 11.00 | 6.30 |
| 671 | 82.40 | 11.60 | 6.00 |
| 681 | 82.30 | 11.20 | 6.50 |
| 691 | 82.60 | 10.86 | 6.54 |
| 701 | 82.00 | 10.90 | 7.10 |
| 711 | 82.40 | 10.86 | 6.74 |
| 721 | 82.10 | 10.90 | 7.00 |
| 731 | 82.90 | 11.32 | 5.78 |
| 741 | 82.90 | 10.60 | 6.50 |
| 751 | 82.50 | 10.80 | 6.70 |
| 761 | 82.40 | 11.00 | 6.60 |
| 771 | 82.30 | 10.90 | 6.80 |
| 781 | 82.60 | 11.00 | 6.40 |
| 792 | 82.50 | 11.00 | 6.50 |

### Example 37 to Example 42

Lithium secondary batteries were manufactured through the same process as in Example 36, except for using a mixture of a natural graphite (d002: 3.358Å) (first graphite) and an artificial graphite (d002: 3.363Å) (second graphite) as the anode active material. The mixing ratio of a natural graphite and an artificial graphite is shown in Table 9 below.

### Example 43

A lithium secondary battery was manufactured through the same process as in Example 1, except that a lithium metal oxide particle (may be referred as "A7" hereafter) were prepared to have a total composition of LiNi_{0.80}Co_{0.11}Mn_{0.09}O₂, a composition of a central portion of LiNi_{0.825}Co_{0.11}Mn_{0.065}O₂, and a composition of a surface portion of LiNi_{0.75}Co_{0.107}Mn_{0.143}O₂ as a cathode active material.

The concentration distribution of the lithium metal oxide particle was measured in the same manner as in Example 1, and the measured result is shown in Table 7 below.

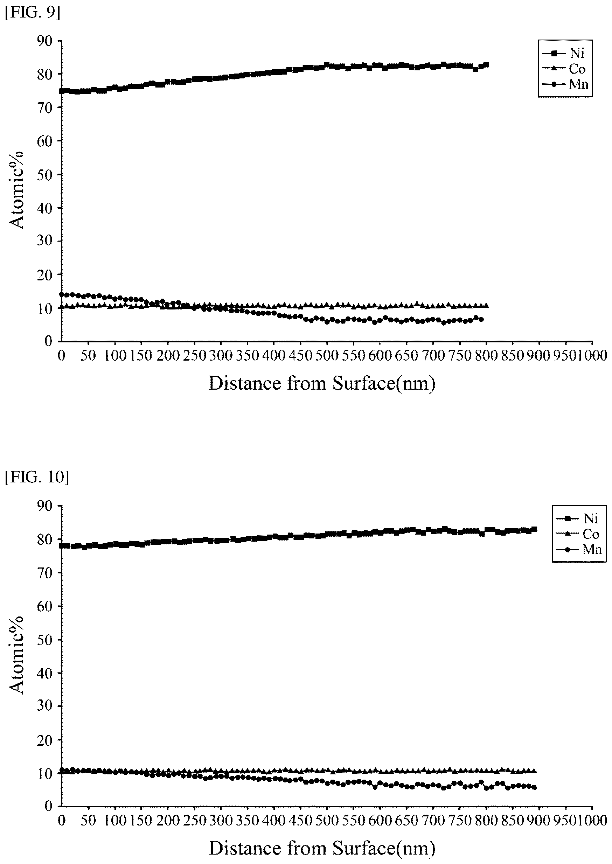

FIG. 9 is a concentration profile graph of metal elements included in the lithium metal oxide particle of Example 43 (A7). Referring to FIG. 9, the concentration gradient region of Ni and Mn was formed at a region in a range of about 50nm to 550nm. A content ratio of Ni with respect to Mn (Ni/Mn) in the surface was measured as 5.24.

**[Table 7]**

| Distance from the outermost surface (nm) | Ni (Atomic %) | Co (Atomic %) | Mn (Atomic %) |
|---|---|---|---|
| 0 | 75 | 10.70 | 14.30 |
| 10 | 75.2 | 10.80 | 14.00 |
| 20 | 75.1 | 10.60 | 14.30 |
| 30 | 74.9 | 11.20 | 13.90 |
| 40 | 75.1 | 11.30 | 13.60 |
| 50 | 75 | 11.00 | 14.00 |
| 60 | 75.4 | 10.90 | 13.73 |
| 70 | 75.1 | 11.00 | 13.87 |
| 80 | 75.3 | 11.30 | 13.40 |
| 90 | 75.9 | 10.70 | 13.43 |
| 100 | 76.1 | 10.90 | 12.97 |
| 110 | 75.8 | 11.00 | 13.20 |
| 120 | 76.0 | 11.30 | 12.73 |
| 130 | 76.5 | 10.60 | 12.86 |
| 140 | 76.4 | 10.90 | 12.70 |
| 150 | 76.5 | 10.70 | 12.83 |
| 160 | 77.0 | 11.00 | 11.96 |
| 170 | 77.3 | 11.30 | 11.40 |
| 180 | 77.0 | 11.20 | 11.83 |
| 190 | 77.1 | 10.70 | 12.16 |
| 200 | 77.8 | 11.16 | 11.04 |
| 210 | 77.9 | 10.60 | 11.53 |
| 220 | 77.6 | 10.57 | 11.79 |
| 230 | 77.9 | 11.30 | 10.79 |
| 240 | 78.4 | 10.60 | 11.03 |
| 250 | 78.6 | 11.00 | 10.36 |
| 260 | 78.6 | 11.00 | 10.39 |
| 271 | 78.9 | 11.30 | 9.83 |
| 281 | 78.7 | 11.40 | 9.86 |
| 291 | 78.9 | 10.90 | 10.19 |
| 301 | 79.1 | 11.00 | 9.92 |
| 311 | 79.2 | 10.70 | 10.06 |
| 321 | 79.4 | 11.00 | 9.59 |
| 331 | 79.6 | 11.00 | 9.42 |
| 341 | 79.7 | 10.80 | 9.46 |
| 351 | 79.9 | 11.00 | 9.09 |
| 361 | 80.1 | 11.00 | 8.92 |
| 371 | 80.2 | 11.30 | 8.46 |
| 381 | 80.4 | 10.80 | 8.79 |
| 391 | 80.6 | 10.70 | 8.72 |
| 401 | 80.7 | 10.60 | 8.65 |
| 411 | 80.8 | 11.30 | 7.89 |
| 421 | 81.0 | 11.16 | 7.87 |
| 431 | 81.5 | 10.80 | 7.65 |
| 441 | 81.4 | 10.90 | 7.69 |
| 451 | 81.5 | 10.70 | 7.82 |
| 461 | 82.0 | 11.16 | 6.80 |
| 471 | 82.3 | 11.16 | 6.53 |
| 481 | 82.0 | 10.78 | 7.24 |
| 491 | 82.1 | 11.00 | 6.85 |
| 501 | 82.8 | 11.16 | 6.03 |
| 511 | 82.60 | 10.57 | 6.83 |
| 521 | 82.40 | 11.38 | 6.22 |
| 531 | 82.40 | 11.30 | 6.30 |
| 541 | 81.90 | 11.16 | 6.94 |
| 551 | 82.50 | 10.60 | 6.90 |
| 561 | 82.50 | 10.90 | 6.60 |
| 571 | 82.80 | 10.70 | 6.50 |
| 581 | 82.00 | 11.00 | 7.00 |
| 591 | 82.90 | 11.30 | 5.80 |
| 601 | 82.80 | 10.70 | 6.50 |
| 611 | 81.90 | 10.70 | 7.40 |
| 621 | 82.40 | 10.90 | 6.70 |
| 631 | 82.50 | 11.00 | 6.50 |
| 641 | 82.80 | 11.20 | 6.00 |
| 651 | 82.70 | 10.86 | 6.44 |
| 661 | 82.20 | 11.00 | 6.80 |
| 671 | 82.10 | 11.60 | 6.30 |
| 681 | 82.40 | 11.30 | 6.30 |
| 691 | 82.90 | 10.70 | 6.40 |
| 701 | 82.20 | 10.90 | 6.90 |
| 711 | 82.50 | 10.86 | 6.64 |
| 721 | 83.30 | 11.00 | 5.70 |
| 731 | 82.50 | 11.32 | 6.18 |
| 741 | 82.90 | 10.60 | 6.50 |
| 751 | 82.80 | 10.80 | 6.40 |
| 761 | 82.70 | 11.00 | 6.30 |
| 771 | 82.60 | 10.90 | 6.50 |
| 781 | 81.60 | 11.00 | 7.40 |
| 792 | 82.50 | 11.00 | 6.50 |

### Example 44 to Example 49

Lithium secondary batteries were manufactured through the same process as in Example 43, except for using a mixture of a natural graphite (d002: 3.358Å) (first graphite) and an artificial graphite (d002: 3.363Å) (second graphite) as the anode active material. The mixing ratio of a natural graphite and an artificial graphite is shown in Table 9 below.

### Comparative Example 1

A lithium secondary battery was manufactured through the same process as in Example 1, except that a lithium metal oxide particle (may be referred as "A8" hereafter) were prepared to have a total composition of LiNi_{0.80}Co_{0.11}Mn_{0.09}O₂, a composition of a central portion of LiNi_{0.825}Co_{0.11}Mn_{0.065}O₂, and a composition of a surface portion of LiNi_{0.78}Co_{0.107}Mn_{0.113}O₂ as a cathode active material.

The concentration distribution of the lithium metal oxide particle was measured in the same manner as in Example 1, and the measured result is shown in Table 8 below.

FIG. 10 is a concentration profile graph of metal elements included in the lithium metal oxide particle of Comparative Example 1 (A8). Referring to FIG. 10, the concentration gradient region of Ni and Mn was formed at a region in a range of about 50nm to 800nm. A content ratio of Ni with respect to Mn (Ni/Mn) in the surface was measured as 6.9.

**[Table 8]**

| Distance from the outermost surface (nm) | Ni (Atomic %) | Co (Atomic %) | Mn (Atomic %) |
|---|---|---|---|
| 0 | 78 | 10.70 | 11.30 |
| 10 | 78.2 | 10.80 | 11.00 |
| 20 | 77.9 | 10.60 | 11.50 |
| 30 | 78 | 11.20 | 10.80 |
| 40 | 77.6 | 11.30 | 11.10 |
| 50 | 78 | 11.00 | 11.00 |
| 60 | 78.3 | 10.90 | 10.83 |
| 70 | 78.0 | 11.00 | 11.05 |
| 80 | 78.0 | 11.30 | 10.68 |
| 90 | 78.5 | 10.70 | 10.80 |
| 100 | 78.6 | 10.90 | 10.53 |
| 110 | 78.3 | 10.86 | 10.89 |
| 120 | 78.3 | 11.30 | 10.38 |
| 130 | 78.8 | 10.60 | 10.60 |
| 140 | 78.6 | 10.90 | 10.53 |
| 150 | 78.6 | 11.00 | 10.45 |
| 160 | 79.1 | 11.00 | 9.87 |
| 170 | 79.2 | 11.30 | 9.50 |
| 180 | 79.2 | 11.20 | 9.62 |
| 190 | 79.4 | 10.70 | 9.95 |
| 200 | 79.4 | 11.16 | 9.42 |
| 210 | 79.4 | 10.60 | 10.00 |
| 220 | 79.1 | 10.57 | 10.36 |
| 230 | 79.3 | 11.30 | 9.45 |
| 240 | 79.6 | 10.60 | 9.77 |
| 250 | 79.7 | 11.00 | 9.30 |
| 260 | 79.7 | 11.00 | 9.32 |
| 271 | 80.0 | 11.30 | 8.75 |
| 281 | 79.6 | 11.40 | 8.97 |
| 291 | 79.7 | 10.90 | 9.40 |
| 301 | 79.8 | 11.00 | 9.22 |
| 311 | 79.9 | 10.70 | 9.45 |
| 321 | 80.2 | 11.00 | 8.77 |
| 331 | 79.9 | 11.00 | 9.10 |
| 341 | 80.1 | 10.80 | 9.12 |
| 351 | 80.2 | 11.00 | 8.85 |
| 361 | 80.2 | 11.00 | 8.77 |
| 371 | 80.3 | 11.30 | 8.40 |
| 381 | 80.4 | 10.80 | 8.82 |
| 391 | 80.8 | 10.70 | 8.55 |
| 401 | 80.9 | 10.60 | 8.47 |
| 411 | 80.5 | 10.86 | 8.64 |
| 421 | 80.6 | 11.16 | 8.27 |
| 431 | 81.1 | 11.00 | 7.95 |
| 441 | 80.8 | 10.90 | 8.27 |
| 451 | 80.8 | 10.70 | 8.50 |
| 461 | 81.3 | 11.16 | 7.57 |
| 471 | 81.1 | 11.16 | 7.79 |
| 481 | 81.0 | 10.78 | 8.19 |
| 491 | 81.1 | 11.00 | 7.90 |
| 501 | 81.7 | 11.16 | 7.17 |
| 511 | 81.75 | 10.57 | 7.68 |
| 521 | 81.7 | 11.00 | 7.27 |
| 531 | 81.9 | 11.30 | 6.80 |
| 541 | 81.18 | 11.16 | 7.67 |
| 551 | 81.85 | 10.60 | 7.55 |
| 561 | 81.33 | 10.90 | 7.77 |
| 571 | 81.7 | 10.70 | 7.60 |
| 581 | 81.58 | 11.00 | 7.42 |
| 591 | 82.35 | 11.30 | 6.35 |
| 601 | 81.9 | 10.70 | 7.37 |
| 611 | 82.4 | 10.70 | 6.90 |
| 621 | 82.6 | 10.90 | 6.52 |
| 631 | 81.85 | 11.00 | 7.15 |
| 641 | 82.53 | 10.86 | 6.61 |
| 651 | 82.80 | 11.00 | 6.20 |
| 661 | 83.00 | 11.00 | 6.00 |
| 671 | 82.10 | 10.86 | 7.04 |
| 681 | 81.80 | 11.30 | 6.90 |
| 691 | 82.90 | 10.70 | 6.40 |
| 701 | 82.20 | 10.90 | 6.90 |
| 711 | 82.70 | 10.86 | 6.44 |
| 721 | 83.30 | 11.00 | 5.70 |
| 731 | 82.50 | 11.32 | 6.18 |
| 741 | 82.10 | 10.60 | 7.30 |
| 751 | 82.00 | 10.80 | 7.20 |
| 761 | 82.70 | 11.00 | 6.30 |
| 771 | 82.60 | 10.90 | 6.50 |
| 781 | 82.40 | 11.00 | 6.60 |
| 792 | 81.60 | 10.86 | 7.54 |
| 802 | 83.10 | 11.00 | 5.90 |
| 812 | 83.00 | 10.90 | 6.10 |
| 822 | 82.10 | 10.70 | 7.20 |
| 832 | 81.80 | 11.00 | 7.20 |
| 842 | 82.90 | 11.30 | 5.80 |
| 852 | 82.80 | 10.70 | 6.50 |
| 862 | 82.70 | 10.70 | 6.60 |
| 872 | 82.70 | 10.90 | 6.40 |
| 882 | 82.50 | 11.00 | 6.50 |
| 892 | 82.50 | 11.00 | 6.50 |

### Comparative Example 2 to 7

Lithium secondary batteries were manufactured through the same process as in Comparative Example 1, except for using a mixture of a natural graphite (d002: 3.358Å) (first graphite) and an artificial graphite (d002: 3.363Å) (second graphite) as the anode active material. The mixing ratio of a natural graphite and an artificial graphite is shown in Table 9 below.

### Example 50

Lithium secondary battery was manufactured through the same process as in Example 25, except for using a natural graphite (d002: 3.356Å) as the anode active material.

### Example 51

Lithium secondary battery was manufactured through the same process as in Example 25, except for using a natural graphite (d002: 3.360Å) as the anode active material.

### Example 52

Lithium secondary battery was manufactured through the same process as in Example 25, except for using an artificial graphite (d002: 3.361Å) as the anode active material.

### Example 53

Lithium secondary battery was manufactured through the same process as in Example 25, except for using an artificial graphite (d002: 3.365Å) as the anode active material.

### Comparative Example 8

A lithium secondary battery was manufactured through the same process as in Example 1, except for using a lithium metal oxide particle (may be referred as "A9" hereafter) which has a constant chemical composition of LiNi_{0.80}Co_{0.11}Mn_{0.09}O₂ through an entire particle and does not have a concentration gradient.

### Comparative Example 9 to 14

Lithium secondary batteries were manufactured through the same process as in Comparative Example 8, except for using a mixture of a natural graphite (d002: 3.358Å) (first graphite) and an artificial graphite (d002: 3.363Å) (second graphite) as the anode active material. The mixing ratio of a natural graphite and an artificial graphite is shown in Table 9 below.

### Comparative Example 15

Lithium secondary battery was manufactured through the same process as in Example 7, except for using an artificial graphite (d002: 3.370Å) as the anode active material.

### Comparative Example 16

Lithium secondary battery was manufactured through the same process as in Example 14, except for using an artificial graphite (d002: 3.370Å) as the anode active material.

### Comparative Example 17

Lithium secondary battery was manufactured through the same process as in Example 21, except for using an artificial graphite (d002: 3.370Å) as the anode active material.

### Comparative Example 18

Lithium secondary battery was manufactured through the same process as in Example 28, except for using an artificial graphite (d002: 3.370Å) as the anode active material.

### Comparative Example 19

Lithium secondary battery was manufactured through the same process as in Example 35, except for using an artificial graphite (d002: 3.370Å) as the anode active material.

### Comparative Example 20

Lithium secondary battery was manufactured through the same process as in Example 42, except for using an artificial graphite (d002: 3.370Å) as the anode active material.

### Comparative Example 21

Lithium secondary battery was manufactured through the same process as in Example 49, except for using an artificial graphite (d002: 3.370Å) as the anode active material.

### Comparative Example 22

Lithium secondary battery was manufactured through the same process as in Comparative Example 7, except for using an artificial graphite (d002: 3.370Å) as the anode active material.

### Comparative Example 23

Lithium secondary battery was manufactured through the same process as in Comparative Example 14, except for using an artificial graphite (d002: 3.370Å) as the anode active material.

### Experimental Example

### (1) Evaluation of Lifespan under Room Temperature

The lithium secondary batteries prepared in Examples and Comparative Examples were repeatedly charged (CC-CV 1.0 C 4.15 V 0.05 C CUT-OFF) and discharged (CC 1.0 C 3.1 V CUT-OFF) 1,000 times, and then a discharging capacity at a 1,000th cycle was calculated as a percentage (%) with respect to a first cycle discharging capacity to evaluate the life-span at a room temperature.

### (2) Evaluation of Capacity Recovery Rate at High Temperature

The lithium secondary batteries prepared in Examples and Comparative Examples were charged under a conditions of CC-CV 0.5C 4.15V 0.05C CUT-OFF and stored in an oven at 60°C for 8 weeks. Subsequently, after discharging under CC 0.5C 2.75V CUT-OFF condition, the batteries ware charged under CC-CV 0.5C 4.2V 0.05C CUT-OFF condition, and a discharge capacity under CC 0.5C 2.75V CUT-OFF condition was measured again. The capacity recovery rate was measured by comparing the discharge capacity described above with the discharge capacity at the time of standard charging and discharging.

### (3) Evaluation of Energy Density

The electric energy (Wh) was calculated by multiplying the formation discharging capacity and the average voltage of each of the lithium secondary batteries prepared in Examples and Comparative Examples. Energy density per cell weight was obtained by dividing the electric energy (Wh) with the weight of the cell.

### (4) Evaluation on penetration stability

The battery cells of Examples and Comparative Examples charged under a condition of 0.5C 4.2V 0.0.5C CUT-OFF were penetrated at a speed of 80 mm/sec by a nail having a diameter of 3 mm and evaluated. The results are shown in Table 9 below.

In Table 9, the surface Ni% (atomic%) and the surface Mn% (atomic%) of the cathode active material used in each of Examples and Comparative Examples are listed, and the surface content ratio (Ni% / Mn%) is listed together.

**[Table 9]**

| | Cathode active material | | | | Anode active material | | | Capacity retention rate (%) (1000 cycle) | Capacity recover rate under high temperature (%) | Penetration stability | Energy density (Wh/kg) |
|---|---|---|---|---|---|---|---|---|---|---|---|
| | Species | Ni% at surface | Mn% at surface | Ni/Mn at surface | Natural graphite (d002) (Å) | Artificial graphite (d002) (Å) | Mixing ratio of natural/artificial graphite | | | | |
| Example 1 | A1 | 20 | 69 | 0.29 | 3.358 | 3.363 | 100/0 | 75.0 | 56.3 | not ignited | 230 |
| Example 2 | A1 | 20 | 69 | 0.29 | 3.358 | 3.363 | 90/10 | 77.5 | 57.2 | not ignited | 230 |
| Example 3 | A1 | 20 | 69 | 0.29 | 3.358 | 3.363 | 70/30 | 79.7 | 58.5 | not ignited | 230 |
| Example 4 | A1 | 20 | 69 | 0.29 | 3.358 | 3.363 | 50/50 | 81.9 | 59.1 | not ignited | 230 |
| Example 5 | A1 | 20 | 69 | 0.29 | 3.358 | 3.363 | 30/70 | 84.7 | 60.6 | not ignited | 230 |
| Example 6 | A1 | 20 | 69 | 0.29 | 3.358 | 3.363 | 10/90 | 86.7 | 61.4 | not ignited | 230 |
| Example 7 | A1 | 20 | 69 | 0.29 | 3.358 | 3.363 | 0/100 | 89.3 | 63.0 | not ignited | 230 |
| Example 8 | A2 | 30 | 59 | 0.51 | 3.358 | 3.363 | 100/0 | 74.7 | 61.2 | not ignited | 230 |
| Example 9 | A2 | 30 | 59 | 0.51 | 3.358 | 3.363 | 90/10 | 77.0 | 62.4 | not ignited | 230 |
| Example 10 | A2 | 30 | 59 | 0.51 | 3.358 | 3.363 | 70/30 | 79.3 | 63.3 | not ignited | 230 |
| Example 11 | A2 | 30 | 59 | 0.51 | 3.358 | 3.363 | 50/50 | 81.3 | 64.3 | not ignited | 230 |
| Example 12 | A2 | 30 | 59 | 0.51 | 3.358 | 3.363 | 30/70 | 83.4 | 65.9 | not ignited | 230 |
| Example 13 | A2 | 30 | 59 | 0.51 | 3.358 | 3.363 | 10/90 | 86.0 | 66.7 | not ignited | 230 |
| Example 14 | A2 | 30 | 59 | 0.51 | 3.358 | 3.363 | 0/100 | 89.0 | 68.4 | not ignited | 230 |
| Example 15 | A3 | 40 | 49.4 | 0.81 | 3.358 | 3.363 | 100/0 | 74.5 | 65.0 | not ignited | 230 |
| Example 16 | A3 | 40 | 49.4 | 0.81 | 3.358 | 3.363 | 90/10. | 76.3 | 66.4 | not ignited | 230 |
| Example 17 | A3 | 40 | 49.4 | 0.81 | 3.358 | 3.363 | 70/30 | 78.8 | 67.1 | not ignited | 230 |
| Example 18 | A3 | 40 | 49.4 | 0.81 | 3.358 | 3.363 | 50/50 | 81.1 | 68.9 | not ignited | 230 |
| Example 19 | A3 | 40 | 49.4 | 0.81 | 3.358 | 3.363 | 30/70 | 83.5 | 69.7 | not ignited | 230 |
| Example 20 | A3 | 40 | 49.4 | 0.81 | 3.358 | 3.363 | 10/90 | 85.4 | 70.9 | not ignited | 230 |
| Example 21 | A3 | 40 | 49.4 | 0.81 | 3.358 | 3.363 | 0/100 | 87.7 | 72.4 | not ignited | 230 |
| Example 22 | A4 | 50 | 39.4 | 1.27 | 3.358 | 3.363 | 100/0 | 74.2 | 70.2 | not ignited | 230 |
| Example 23 | A4 | 50 | 39.4 | 1.27 | 3.358 | 3.363 | 90/10. | 75.9 | 71.6 | not ignited | 230 |
| Example 24 | A4 | 50 | 39.4 | 1.27 | 3.358 | 3.363 | 70/30 | 78.4 | 72.4 | not ignited | 230 |
| Example 25 | A4 | 50 | 39.4 | 1.27 | 3.358 | 3.363 | 50/50 | 80.3 | 74.3 | not ignited | 230 |
| Example 26 | A4 | 50 | 39.4 | 1.27 | 3.358 | 3.363 | 30/70 | 82.7 | 75.7 | not ignited | 230 |
| Example 27 | A4 | 50 | 39.4 | 1.27 | 3.358 | 3.363 | 10/90 | 84.6 | 76.6 | not ignited | 230 |
| Example 28 | A4 | 50 | 39.4 | 1.27 | 3.358 | 3.363 | 0/100 | 87.4 | 77.9 | not ignited | 230 |
| Example 29 | A5 | 60 | 29.3 | 2.05 | 3.358 | 3.363 | 100/0 | 74.0 | 70.0 | not ignited | 230 |
| Example 30 | A5 | 60 | 29.3 | 2.05 | 3.358 | 3.363 | 90/10. | 75.9 | 71.3 | not ignited | 230 |
| Example 31 | A5 | 60 | 29.3 | 2.05 | 3.358 | 3.363 | 70/30 | 78.3 | 72.2 | not ignited | 230 |
| Example 32 | A5 | 60 | 29.3 | 2.05 | 3.358 | 3.363 | 50/50 | 80.3 | 73.7 | not ignited | 230 |
| Example 33 | A5 | 60 | 29.3 | 2.05 | 3.358 | 3.363 | 30/70 | 82.0 | 74.9 | not ignited | 230 |
| Example 34 | A5 | 60 | 29.3 | 2.05 | 3.358 | 3.363 | 10/90 | 84.7 | 76.7 | not ignited | 230 |
| Example 35 | A5 | 60 | 29.3 | 2.05 | 3.358 | 3.363 | 0/100 | 86.6 | 78.3 | not ignited | 230 |
| Example 36 | A6 | 70 | 19.3 | 3.63 | 3.358 | 3.363 | 100/0 | 73.8 | 70.1 | not ignited | 230 |
| Example 37 | A6 | 70 | 19.3 | 3.63 | 3.358 | 3.363 | 90/10. | 76.0 | 71.6 | not ignited | 230 |
| Example 38 | A6 | 70 | 19.3 | 3.63 | 3.358 | 3.363 | 70/30 | 77.5 | 72.7 | not ignited | 230 |
| Example 39 | A6 | 70 | 19.3 | 3.63 | 3.358 | 3.363 | 50/50 | 80.0 | 73.7 | not ignited | 230 |
| Example 40 | A6 | 70 | 19.3 | 3.63 | 3.358 | 3.363 | 30/70 | 82.0 | 75.1 | not ignited | 230 |
| Example 41 | A6 | 70 | 19.3 | 3.63 | 3.358 | 3.363 | 10/90 | 84.5 | 76.8 | not ignited | 230 |
| Example 42 | A6 | 70 | 19.3 | 3.63 | 3.358 | 3.363 | 0/100 | 86.4 | 77.7 | not ignited | 230 |
| Example 43 | A7 | 75 | 14.3 | 5.24 | 3.358 | 3.363 | 100/0 | 73.4 | 70.1 | not ignited | 230 |
| Example 44 | A7 | 75 | 14.3 | 5.24 | 3.358 | 3.363 | 90/10. | 75.0 | 71.1 | not ignited | 230 |
| Example 45 | A7 | 75 | 14.3 | 5.24 | 3.358 | 3.363 | 70/30 | 77.4 | 72.4 | not ignited | 230 |
| Example 46 | A7 | 75 | 14.3 | 5.24 | 3.358 | 3.363 | 50/50 | 79.2 | 74.2 | not ignited | 230 |
| Example 47 | A7 | 75 | 14.3 | 5.24 | 3.358 | 3.363 | 30/70 | 81.6 | 75.6 | not ignited | 230 |
| Example 48 | A7 | 75 | 14.3 | 5.24 | 3.358 | 3.363 | 10/90 | 83.7 | 76.5 | not ignited | 230 |
| Example 49 | A7 | 75 | 14.3 | 5.24 | 3.358 | 3.363 | 0/100 | 85.4 | 78.1 | not ignited | 230 |
| Comparative Example 1 | A8 | 78 | 11.3 | 6.90 | 3.358 | 3.363 | 100/0 | 73.0 | 69.9 | ignited | 230 |
| Comparative Example 2 | A8 | 78 | 11.3 | 6.90 | 3.358 | 3.363 | 90/10. | 74.5 | 70.9 | ignited | 230 |
| Comparative Example 3 | A8 | 78 | 11.3 | 6.90 | 3.358 | 3.363 | 70/30 | 76.8 | 72.6 | ignited | 230 |
| Comparative | A8 | 78 | 11.3 | 6.90 | 3.358 | 3.363 | 50/50 | 78.9 | 73.8 | ignited | 230 |
| Example 4 | | | | | | | | | | | |
| Comparative Example 5 | A8 | 78 | 11.3 | 6.90 | 3.358 | 3.363 | 30/70 | 80.5 | 75.0 | ignited | 230 |
| Comparative Example 6 | A8 | 78 | 11.3 | 6.90 | 3.358 | 3.363 | 10/90 | 82.8 | 76.2 | ignited | 230 |
| Comparative Example 7 | A8 | 78 | 11.3 | 6.90 | 3.358 | 3.363 | 0/100 | 84.5 | 78.1 | ignited | 230 |
| Comparative Example 8 | A9 | | | | 3.358 | 3.363 | 100/0 | 65.0 | 70.0 | ignited | 230 |
| Comparative Example 9 | A9 | | | | 3.358 | 3.363 | 90/10 | 66.0 | 71.4 | ignited | 230 |
| Comparative Example 10 | A9 | | | | 3.358 | 3.363 | 70/30 | 67.3 | 72.2 | ignited | 230 |
| Comparative Example 11 | A9 | | | | 3.358 | 3.363 | 50/50 | 68.1 | 74.0 | ignited | 230 |
| Comparative Example 12 | A9 | | | | 3.358 | 3.363 | 30/70 | 69.7 | 75.0 | ignited | 230 |
| Comparative Example 13 | A9 | | | | 3.358 | 3.363 | 10/90 | 70.5 | 76.4 | ignited | 230 |
| Comparative Example 14 | A9 | | | | 3.358 | 3.363 | 0/100 | 72.2 | 78.2 | ignited | 230 |
| Example 50 ^{.} | A4 | 50 | 39.4 | 1.28 | 3.356 | 3.363 | 50/50 | 78.8 | 72.7 | not ignited | 230 |
| Example 25 | A4 | 50 | 39.4 | 1.28 | 3.358 | 3.363 | 50/50 | 80.3 | 74.3 | not ignited | 230 |
| Example 51 | A4 | 50 | 39.4 | 1.28 | 3.360 | 3.363 | 50/50 | 82.0 | 75.8 | not ignited | 230 |
| Example 52 | A4 | 50 | 39.4 | 1.28 | 3.358 | 3.361 | 50/50 | 78.6 | 72.4 | not ignited | 230 |
| Example 25 | A4 | 50 | 39.4 | 1.28 | 3.358 | 3.363 | 50/50 | 80.3 | 74.3 | not ignited | 230 |
| Example 53 | A4 | 50 | 39.4 | 1.28 | 3.358 | 3.365 | 50/50 | 82.1 | 75.5 | not ignited | 230 |
| Comparative Example 15 | A1 | 20 | 69 | 0.29 | 3.358 | 3.37 | 0/100 | 93.6 | 64.4 | not ignited | 220 |
| Comparative Example 16 | A2 | 30 | 59 | 0.51 | 3.358 | 3.37 | 0/100 | 92.4 | 70.3 | not ignited | 220 |
| Comparative Example 17 | A3 | 40 | 49.4 | 0.81 | 3.358 | 3.37 | 0/100 | 91.6 | 74.1 | not ignited | 220 |
| Comparative Example 18 | A4 | 50 | 39.4 | 1.27 | 3.358 | 3.37 | 0/100 | 90.2 | 80.0 | not ignited | 220 |
| Comparative Example 19 | A5 | 60 | 29.3 | 2.05 | 3.358 | 3.37 | 0/100 | 90.2 | 80.2 | not ignited | 220 |
| Comparative Example 20 | A6 | 70 | 19.3 | 3.63 | 3.358 | 3.37 | 0/100 | 89.4 | 80.0 | not ignited | 220 |
| Comparati ve Example 21 | A7 | 75 | 14.3 | 5.24 | 3.358 | 3.37 | 0/100 | 88.5 | 80.1 | not ignited | 220 |
| Comparative Example 22 | A8 | 78 | 11.3 | 6.90 | 3.358 | 3.37 | 0/100 | 86.8 | 79.6 | ignited | 220 |
| Comparative Example 23 | A9 | | | | 3.358 | 3.37 | 0/100 | 73.3 | 79.8 | ignited | 220 |

Referring to Table 9, in the lithium secondary battery according to the Examples, excellent life characteristics, high temperature storage characteristics (capacity recovery rate after high temperature storage) and penetration stability were obtained compared to Comparative Examples.

Specifically, as compared with Comparative Examples 8 to 14 in which the concentration was fixed as a whole, high temperature storage characteristics and life characteristics were significantly improved in Examples through introducing the concentration gradient regions. Additionally, as the artificial graphite was mixed together as the second graphite, the life characteristics and the recovery rate of the high-temperature capacity were further increased.

In the case of Comparative Examples 15 to 23, as the spacing between crystal faces (d002) of graphite used as the anode active material deviated from 3.365Å, the energy density per weight was decreased, and the capacity of the anode became 320 mAh/g or less to be substantially difficult to operate as a secondary battery.

In the case of Comparative Examples 1 to 7 in which lithium metal oxide particles (A8) having a surface Ni / Mn ratio of 6.90 were used as a cathode active material, life stability, high temperature capacity recovery rate, and penetration stability slightly worsened due to an increase in surface nickel content.

On the other hand, in the case of Examples 1 to 21, where the surface Mn content exceeds about 40%, the high-temperature capacity characteristics were slightly deteriorated.

## Claims

1. A lithium secondary battery, comprising:
a cathode formed from a cathode active material including a lithium metal oxide particle containing nickel (Ni) and manganese (Mn);
an anode formed from an anode active material containing a graphite-based material having a crystal interplanar distance (d002) of 3.356 to 3.365 □; and
a separator interposed between the cathode and the anode,
wherein the lithium metal oxide particle includes a concentration gradient region formed between a center of the particle and a surface of the particle, and
a ratio of a concentration (atomic%) of Ni with respect to a concentration (atomic%) of Mn at the surface of the lithium metal oxide particle is 0.29 or more and less than 6.

2. The lithium secondary battery according to claim 1, wherein the ratio of a concentration (atomic%) of Ni with respect to a concentration (atomic%) of Mn at the surface of the lithium metal oxide particle is 1.2 to 5.3.

3. The lithium secondary battery according to claim 1, wherein a Ni concentration continuously decreases and a Mn concentration continuously increases from the center toward the surface in the concentration gradient region of the lithium metal oxide particle.

4. The lithium secondary battery according to claim 3, wherein the lithium metal oxide particle further comprises cobalt (Co),
wherein a concentration of Co is constant from the center to the surface.

5. The lithium secondary battery according to claim 1, wherein each of Ni and Mn has a constant concentration gradient slope in the concentration gradient region.

6. The lithium secondary battery according to claim 5, wherein a difference in amounts between a concentration gradient slope of Ni and a concentration gradient slope of Mn may be 5% or less in the concentration gradient region.

7. The lithium secondary battery according to claim 1, wherein the lithium metal oxide particle includes a core region having constant concentrations of metal elements and embracing at least 50% of a radius of the lithium metal oxide particle from the center.

8. The lithium secondary battery according to claim 7, wherein the concentration gradient region is extended from a surface of the core region.

9. The lithium secondary battery according to claim 1, wherein the lithium metal oxide particle further includes a peripheral portion extending from at least a portion of the surface toward the center and having a constant concentration of metal elements.

10. The lithium secondary battery according to claim 9, wherein the concentration gradient region is formed at a region between the core region and the peripheral portion.

11. The lithium secondary battery according to claim 10, wherein a distance (depth) in which the peripheral portion extends from a surface of the lithium metal oxide particle to a center is 10nm to 200nm.

12. The lithium secondary battery according to claim 1, wherein an overall average chemical composition the lithium metal oxide particle is represented by Chemical Formula1 below:
[Chemical Formula 1] LiₓNiₐMn_{b}M3_{c}O_{y}
wherein, in Chemical Formula 1, M3 includes at least one selected from a group consisting of Co, Na, Mg, Ca, Ti, V, Cr, Cu, Zn, Ge, Sr, Ag, Ba, Zr, Nb, Mo, Al, Ga and B, and
0<x≤ 1.1, 2≤y≤2.02, 0≤a≤1, 0≤b≤1, 0≤c≤1, 0<a+b+c≤1.

13. The lithium secondary battery according to claim 1, wherein the anode active material includes a natural graphite and an artificial graphite.

14. The lithium secondary battery according to claim 13, wherein a crystal interplanar distance (d002) of the natural graphite may be 3.356 to 3.360Å and a crystal interplanar distance (d002) of the artificial graphite may be 3.361 to 3.365Å.

15. The lithium secondary battery according to claim 1, wherein the anode active material includes a natural graphite and an artificial graphite in a weight ratio of more than 0:100 and 90:10 or less.

16. The lithium secondary battery according to claim 15, wherein a mixed weight ratio of the natural graphite and the artificial graphite is 10:90 to 50:50.
